# EUROPEAN PATENT APPLICATION

(11) **EP 1 503 597 A2**
(43) Date of publication of application: **02.02.2005**
(21) Application number: 04254338.9
(22) Date of filing: 20.07.2004
(51) Int. Cl.: H04N 7/26

(54) **Video decoding apparatus**

(30) Priority: 28.07.2003 JP 2003281097
(71) Applicant: Matsushita Electric Industrial Co., Ltd., Kadoma-shi, Osaka-fu, 571-8501 (JP)
(72) Inventor: Wada, Yoshiyuki, Neyagawa-shi, Osaka 572-0055 (JP); Yoshioka, Kosukw, Daito-shi, Osaka 574-0006 (JP); Nishida, Hideshi, Nishinomiya-shi, Hyogo 662-0862 (JP)
(74) Representative: Crawford, Andrew Birkby

(57) **Abstract**

A decoding apparatus lightens the load incurred by padding processing. When the decoding apparatus outputs decoded data to a frame memory, a padding unit in the decoding apparatus j udges whether the decoded data includes boundary pixels, and when boundary pixels are judged to be included, performs padding processing to an extension area using boundary pixel data. As a result, as well as pixels in one decoded macroblock being output, when boundary pixels are included in the output macroblock, the boundary pixels are output to the extension area. This eliminates the need to re-read the boundary pixels from the frame memory.

## Description

This application is based on an application No. 2003-281097 filed in Japan, the content of which is hereby incorporated by reference.

### BACKGROUND OF THE INVENTION

### (1) Field of the Invention

The present invention relates to a technique for decoding a compression encoded digital video signal.

### (2) Description of the Related Art

Accompanying the digitalization of terrestrial analog broadcasting systems and satellite broadcasting such as NTSC (national television system committee) and PAL (phase alternation by line), and the digitalization of home AV devices, video is being transferred as digital information that is generated by converting the video into a digital signal. Generally, since the amount of information that results from converting videos into digital information is large, it is inefficient to transmit the digital data as is. For this reason, moving picture compression techniques are used as means for transmitting digital information efficiently. MPEG (moving picture experts group) methods are representative of moving picture compression techniques. These methods have been made an ISO/IEC international standard, and are widely used.

The MPEG methods perform motion compensation using correlation between screens for cutting temporal redundancy of screens, and discrete cosine transformation (hereinafter, referred to as "DCT") using correlation between screens for cutting spatial redundancy of screens. The amount of information is further reduced by subjecting information resulting from motion compensation and information resulting from DCT coding to variable length coding. This kind of video compression method is called hybrid encoding.

Motion compensation encoding compresses the amount of information by predicting an encoded screen based on a different screen (called a "reference frame"), and encodes a difference between a the screen and a predicted value, and positional information of a prediction value (hereinafter called a "motion vector"). This motion compensation coding is widely used as a technique for improving coding efficiency in video compression techniques.

Note that since DCT coding and variable length coding are commonly known, a description thereof is omitted here.

In recent years, a method of referencing a location outside the reference frame is being employed in movement compensation coding. In this method, when a macroblock being subject to coding references a location outside the reference frame, processing called padding is performed to copy, to pixels in an outside area where pixel values do not exist, values of pixels in the reference frame that are closest to the pixels in the outside area (such pixels that are closest to the pixels in outside area the are called "boundary pixels"). Since the number of patterns of reference data that macroblocks near the boundary of a frame reference increases if motion compensation coding is performed using reference data that has been subject to padding processing in this way, coding efficiency can be improved.

Here, reference data is data of a macroblock indicated by a motion vector value. Furthermore, since boundary pixels are pixels in a reference frame that are closest to pixels outside the area, boundary pixels are pixels that are positioned on inner edge of the reference frame.

The method of referencing outside a reference frame is also employed in video decoding. A video decoding apparatus and a video decoding method used in such a case are disclosed in Document 1. According to this apparatus and method, if an access address of a macroblock to be decoded is outside an effective image data area, the macroblock is decoded by supplementing data by controlling the access address so as to be an address that indicates the effective image data area.

However, this video decoding method has the following problems.

When a motion vector references outside the reference frame area, the value of the motion vector is converted so as to be within the reference frame area, reference data is obtained, and the obtained reference data is padded. In this method, there are cases in which the same reference data is padded with respect to two differing motion vector values that indicate outside the area. For this reason, the amount of processing increases, and a problem occurs that the processing load in decoding coded data is great.

A method proposed in order to lighten the processing load in decoding coded data is one in which, using a decoded picture that has been written to a frame memory, padding processing is performed in advance to an area outside the written decoded picture.

However, in the method that performs padding processing in advance to outside the area of the decoded image written to the frame memory, it is necessary to read each border pixel of the decoded image from the frame memory. For this reason, the frame memory and the processing unit that performs the padding processing must be accessed many times, an a problem arises that the processing load increases greatly in padding processing. Document 1: International patent publication No. WO 00/36841

### SUMMARY OF THE INVENTION

The obj ect of the present invention is to provide a decoding apparatus, a decoding method, and a decoding program that lighten the loading of padding processing.

In order to achieve the stated object, the present invention is a decoding apparatus that decodes video, including:
a storage unit that includes an image area and an extension area, the image area being for storing one frame image of video, and
the extension area being for storing an extension image that surrounds the frame image; a decoding unit operable to receive a compression encoded series that has been generated by compression encoding a frame image in blocks of a predetermined number of pixels, and decode the received compression encoded series so as to generate a block image composed of the predetermined number of pixels; and an output unit operable to output the block image to the image area of the storage unit, wherein, when outputting the block image, the output unit outputs pixels in the block image that are adjacent to an inner edge of the frame to respective corresponding locations in the extension area.

According to the stated structure, when outputting the block image to the storage unit, the decoding apparatus outputs pixels included in the block image that are adjacent to the inner edge of the frame to corresponding locations in the extension frame, and therefore it is unnecessary to re-read the pixels adjacent to the inner edge of the frame from the storage unit. This lightens the load of processing for outputting pixels to the extension area.

Here, when outputting the block image, the output unit may judge, for each pixel in the block image, whether or not the pixel is adjacent to the inner edge, and when the pixel is judged to be adjacent to the inner edge, output the pixel to a corresponding location in the extension area.

According to the stated structure, when the output unit of the decoding apparatus judges a pixel included in the block image to be output to the storage unit to be adjacent to the inner edge of the frame, the output unit outputs the pixel to the corresponding location in the extension area.

Here, the decoding apparatus may further include: repetition unit operable to control the decoding unit and the output unit so as to repeatedly perform block image generation, block image output, and output of pixels in the block data that are adjacent to the inner edge to a corresponding location in the extension area, until generation of the frame image and the extension image is complete.

According to the stated structure, one frame image and an extension area surrounding the frame image are able to be generated by using the repeat unit. For example, when the image size is 176 pixels by 144 pixels, the number of boundary pixels is 636. With conventional padding processing to the extension area, 636 readings of boundary pixels from the frame memory are necessary. However, this number is reduced by the present invention.

Here, when a pixel included in the block image is judged to be adjacent to the inner edge, the output unit may calculate one of (i) a horizontal direction address, (ii) a vertical direction address and (iii) horizontal and vertical direction address, in the extension area, each address indicating a location to which the pixel is to be output in the extension area, and output the pixel to the extension area based on the calculated address.

According to the stated structure, when a pixel in the block image is judged to be adjacent to the inside of the frame, the output unit is able to output pixels to the extension area based on a calculated horizontal address, vertical address, and horizontal and vertical address.

Here, the storage unit may further store, in advance, a reference frame image that is made up of another frame image and another extension image, the compression encoded series may include encoded information that is composed of a motion vector and a difference block image, the motion vector indicating either inside or outside of the reference frame image, and the difference block image being a difference between an encoded block and a reference block image in the reference frame image, and the decoding unit may include: a reception sub-unit operable to receive the compression encoded series; an obtaining sub-unit operable to decode the compression encoded series, thereby obtaining the motion vector and the difference block image; a motion vector judgment sub-unit operable to judge whether or not the motion vector indicates outside the reference frame image; a motion vector conversion sub-unit operable to, when the motion vector is judged to indicate outside the reference frame image, convert the motion vector so as to indicate a location that is closest in the reference frame image to the location indicated by the motion vector before conversion, and obtain reference data indicated by the converted motion vector after conversion from the reference frame image; and a block image generation sub-unit operable to generate the block image with use of the reference data and the difference block image.

According to the stated structure, when the motion vector obtained by the obtaining unit is outside the reference frame image, the motion vector conversion unit converts the motion vector so as to be inside the reference frame image, and the reference data can be obtained from the reference frame image with use of the converted motion vector. Furthermore, the block image can be generated using the obtained reference data and the block difference image obtained by the obtaining unit.

Here, when the motion vector judgment sub-unit judges that the motion vector does not indicate outside the reference frame image, themotionvectorconversionsub-unitmayobtainreference data from the reference frame with use of the motion vector.

According to the stated structure, when the motion vector obtained by the obtaining unit is inside the reference frame image, the reference data can be obtained from the reference frame with use of the obtained motion vector.

Here, the compression encoded series may include information of an encoded block image that is composed of an encoded block, and the decoding unit may include: a reception sub-unit operable to receive the compression encoded series; and a generation sub-unit operable to decode the compression encoded series, thereby generating the encoded block image, and treat the generated encoded block image as a block image.

According to the stated structure, the decoding apparatus is able to make the encoded block image generated by the generation unit into a block image.

Here, the storage unit may be one of an external memory and an internal memory.

According to the stated structure, the storage unit is provided either as an external memory or an internal memory of the decoding apparatus.

Here, the storage unit and the output unit may be one of an external memory and an internal memory.

According to the stated structure, the storage unit and the output unit are provided either as an external memory or an internal memory of the decoding apparatus.

Here, the output unit may include: a first output sub-unit operable to output the block image to the image area of the storage unit; a judgment sub-unit operable to, when the block image is being output, judge, for each pixel thereof, whether or not the pixel is adjacent to the inner edge of the frame; and a second output sub-unit operable to, when the judgment sub-unit judges that the pixel is adjacent to the inner edge of the frame, output the pixel to a corresponding location in the extension area.

According to the stated structure, the output unit of the decoding apparatus uses the first output sub-unit, the judgment sub-unit and the second output sub-unit to output a block image to the image area, and, when a pixel included in the block image to be output is judged to neighbor the inner edge of the frame, to output the pixel to an appropriate location in the extension area.

### BRIEF DESCRIPTION OF THE DRAWINGS

These and other objects, advantages and features of the invention will become apparent from the following description thereof taken in conj unction with the accompanying drawings which illustrate a specific embodiment of the invention.

In the drawings:
FIG. 1 is a block diagram showing the structure of a mobile telephone 1;
FIG. 2 is a block diagram showing the structure of an image processing unit 10;
FIG. 3 is a schematic diagram showing the format of image data stored in a frame memory 402;
FIG. 4 is a flowchart showing operations for decoding encoded data;
FIG. 5 is a flowchart showing operations for motion compensation decoding;
FIG. 6 is a flowchart showing operations for outputting decoded data to a frame memory;
FIG. 7 is a flowchart showing operations for padding to an extension area;
FIG. 8 is a flowchart showing vertical padding processing;
FIG. 9 is a flowchart showing horizontal padding processing;
FIG. 10 is a flowchart showing horizontal and vertical padding processing;
FIG. 11 shows timing in decoding processing;
FIG. 12 is a block diagram showing the structure of an image processing unit 10A;
FIG. 13 is a flowchart showing operations for decoded data output processing performed by a padding judgment unit 107A;
FIG. 14 is a flowchart showing operations for write processing performed by a write unit 403A;
FIG. 15 is a block diagram showing the structure of an image processing unit 10B;
FIG. 16 is a flowchart showing operations for decoded data output processing performed by a data output unit 108B; and
FIG. 17 is a flowchart showing operations for write processing performed by a padding unit 404B.

### DESCRIPTION OF THE PREFERRED EMBODIMENT

### 1. First Embodiment

The following describes a mobile telephone 1 as a first embodiment of the present invention.

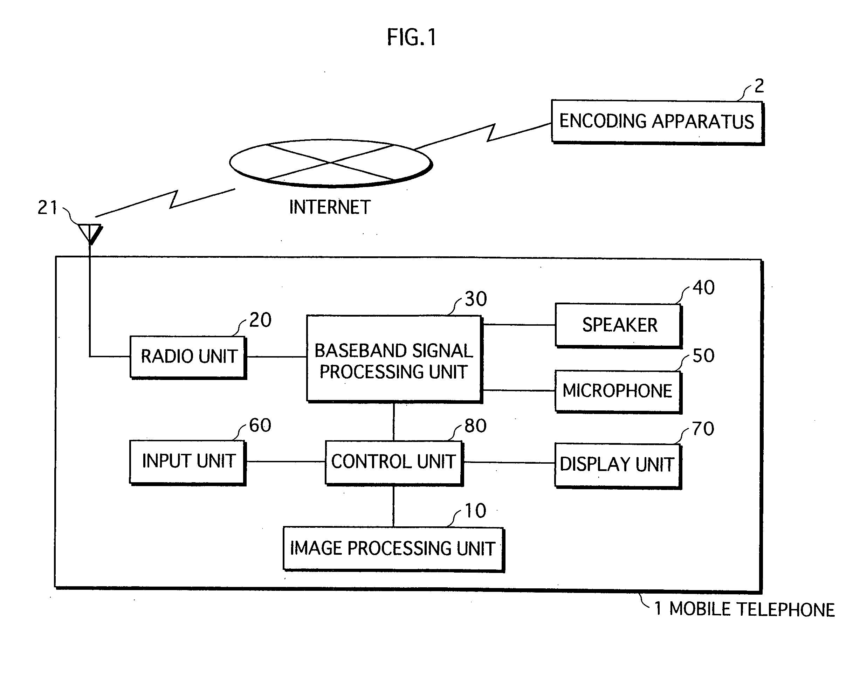

The mobile telephone 1, as shown in FIG. 1, receives information via the Internet of video that has been encoded by a coding apparatus 2, decodes the received information, and reproduces the video.

The following describes video encoding briefly. The encoding apparatus 2 first receives an input image, subjects the received image to A/D conversion, and further converts the converted image to a spatial resolution of the screen size used in encoding. Note that hereinafter an image that has been converted is referred to as an encoded object image. Furthermore, as one example, the image size used in encoding is 176 pixels (horizontal) by 144 pixels (vertical).

Next, the encoding apparatus 2 performs the following encoding for each 16 pixel by 16 pixel macroblock of the encoded object image, in order from left to right and top to bottom of the screen.

The encoding apparatus 2 determines whether to encode the macroblock in motion compensation prediction mode which indicates interframe encoding according to motion compensation, or in intraframe encoding mode which indicates intraframe encoding.

In motion compensation prediction mode, the encoding apparatus 2 takes a difference between macroblock data that is the object of encoding and data of a macroblock obtained by predicting motion from a reference screen, obtains a prediction error signal, and compresses temporal information. The encoding apparatus 2 then subjects the prediction error signal to DCT in block units that are obtained by dividing the macroblock that is the object of encoding into 8 pixel by 8 pixel blocks. As a result of the DCT, DCT coefficients are generated. In intraframe mode, the encoding apparatus 2 subjects the macroblock data to DCT, and generates DCT coefficients, without performing motion compensation.

The encoding apparatus 2 quantizes the generated DCT coefficients, thereby generating quantized DCT coefficients which it then variable length encodes. Furthermore, the encoding apparatus 2 also variable length encodes macroblock encoded information that includes encoded mode and movement vectors.

Furthermore, since the input image is used as a reference screen when encoding the next screen, the encoding apparatus 2 subjects the quantized information to inverse quantization, and then locally decodes the obtained data according to inverse DCT and motion compensation. The encoding apparatus 2 stores the decoded image is stored in an internal frame memory.

The encoded information generated in this way is multiplexed, and an elementary stream (hereinafter, called an "ES"), which is a bitstream, is generated using the multiplexed information. Furthermore, a transport stream (hereinafter, called a "TS") is generated using the generated ES. The encoding apparatus 2 outputs the TS generated in this way.

### 1.1 Structure of the mobile telephone 1

The following describes the structure of the mobile telephone 1.

The mobile telephone 1, as shown in FIG. 1, is composed of a radio unit 20, a baseband signal processing unit 30, a speaker 40, a microphone 50, an input unit 60, a display unit 70, a control unit 80, and an image processing unit 10.

Specifically, the mobile telephone 1 is a computer system composed of a microprocessor, a ROM, a RAM, a display unit, a bus, and the like. A computer program is stored in the ROM, and the mobile telephone 1 achieves its functions by the microprocessor operating according to the computer program.

### 1.1.1 Radio unit 20

The radio unit 20 includes an antennal 21, and transmits and receives radio signals.

### 1.1.2 Baseband signal processing unit 30

The baseband signal processing unit 30 performs signal processing for outputting a signal received from the radio unit 20 to the speaker 40, and signal processing for outputting audio received from the microphone 50 to the radio unit 20.

Furthermore, on receiving a TS via the radio unit 20, the baseband signal processing unit 30 outputs the received TS to the control unit 80.

### 1.1.3 Speaker 40

The speaker 40 outputs, as audio, a signal processed by the baseband signal processing unit 30.

### 1.1.4 Microphone 50

The microphone 50 receives audio from a user, and outputs the received audio to the baseband signal processing unit 30.

### 1.1.5 Input unit 60

The input unit 60 is a keyboard or the like that includes an input function of receiving input from numeric keys or the like. The input unit 60 outputs a key operation signal, which results from the key input from the keyboard, to the control unit 80 as an input instruction from the user.

### 1.1.6 Display unit 70

The display unit 70 displays data as instructed by the control unit 80.

### 1.1.7 Control unit 80

The control unit 80 performs overall control of the mobile telephone 1.

The control unit 80 receives a TS from the baseband signal processing unit 30, and outputs the received TS to the image processing unit 10.

Furthermore, the control unit 80 receives a decoded image from the image processing unit 10, and outputs the received image to the display unit 70 in order to have the image reproduced.

### 1.1.8 Image processing unit 10

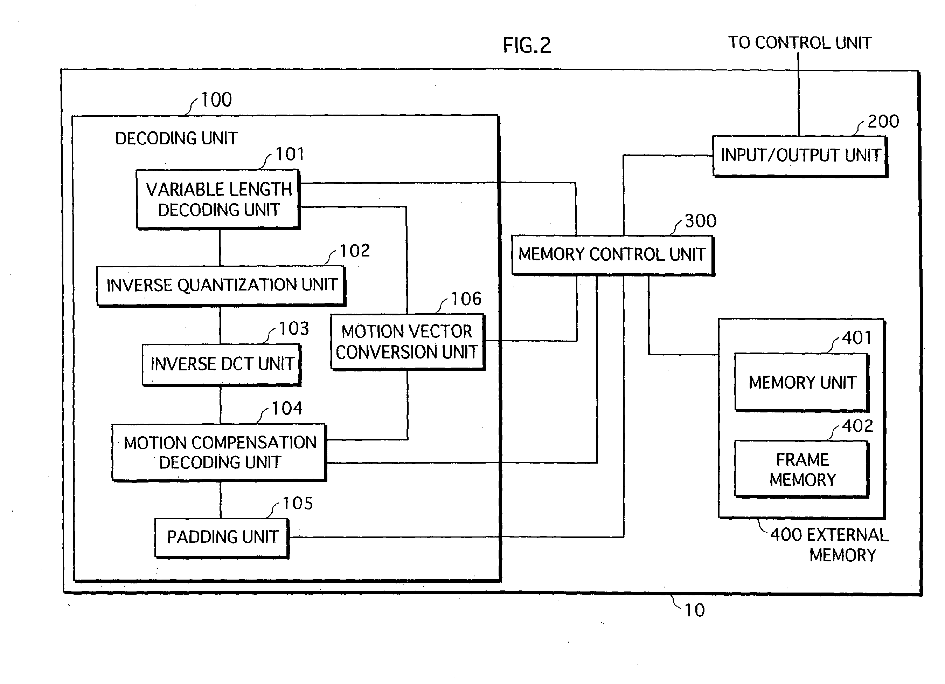

The image processing unit 10, as shown in FIG. 2, is composed of a decoding unit 100, an input/output unit 200, a memory control unit 300, and an external memory 400.

### (1) External memory 400

The external memory 400 has a memory unit 401 and a frame memory 402. Here, the external memory 400 is a DRAM (dynamic random access memory).

### (A) Memory unit 401

The memory unit 401 stores encoded data consisting of data relating to an image.

### (B) Frame memory 402

The frame memory 402 stores an image decoded by the decoding unit 100. The stored image is used as a reference frame when decoding another encoded image. Furthermore, the stored image has an area that is one decoded block larger, both horizontally and vertically, than the displayed image. This area is called an extension area. An image is formed surrounding the reproduced image by outputting (copying) the value of each boundary pixel to the extension area. The extension area has sixteen pixels both horizontally and vertically.

### (2) Input/output unit 200

The input/output unit 200 receives the TS from the control unit 80, separates the received TS into ESs, obtains data relating to an image from each ES, generates encoded data us ing the obtained data, and outputs the generated encoded data to the memory unit 401 via the memory control unit 300.

Furthermore, when an image is to be reproduced, the input/output unit 200 reads the image decoded by the frame memory 402 via the memory control unit 300, and outputs the read image to the control unit 80.

### (3) Decoding unit 100

The decoding unit 100 has a variable length decoding unit 101, an inverse quantization unit 102, an inverse DCT unit 103, a motion compensation decoding unit 104, a padding unit 105, and a motion vector conversion unit 106.

The decoding unit 100 reproduces the image by decoding the image in 16 pixel by 16 pixel macroblock units.

### (A) Variable length decoding unit 101

The variable length decoding unit 101 reads an encoded series of a predetermined length from the encoded data in the memory unit 401. The variable length decoding unit 101 performs entropy decoding using the read encoded series, and obtains the encoding mode, the motion vector information that includes the a reference address indicating reference data, and quantized DCT coefficients.

### (B) Inverse quantization unit 102

The inverse quantization unit 102 applies inverse quantization to the quantized DCT coefficients obtained by the variable length decoding unit 101, thereby restoring the DCT coefficients.

### (C) Inverse DCT unit 103

The inverse DCT unit 103 applies inverse DCT to the DCT coefficients restored by the quantization unit 102, thereby restoring pixel spatial data.

### (D) Motion compensation decoding unit 104

The motion compensation decoding unit 104 judges whether the encoding mode obtained by the variable length decoding unit 101 is motion compensation prediction mode or intra encoding mode.

When the encoding mode is motion compensation prediction mode, the motion compensation decoding unit 104 outputs the motion vector information obtained by the variable length conversion unit 101 to the motion vector conversion unit 106. In addition, the motion compensation decoding unit 104 receives reference data from the memory control unit 300, and adds the received reference data to the pixel spatial data restored by the inverse DCT unit 103, thereby restoring one macroblock of the image. This enables the restored macroblock of the image to be obtained.

When the encoding mode is intra mode, the motion compensation decoding unit 104 treats the pixel spatial data restored by the inverse DCT unit 103 as one restored macroblock.

Note that hereinafter the image of one restored macroblock is referred to as decoded data.

The motion compensation decoding unit 104 outputs the decoded data to the padding unit 105.

### (E) Motion vector conversion unit 106

The motion vector conversion unit 106 receives motion vector information from the motion compensation decoding unit 104, and using the reference address included in the received motion vector information, judges whether or not the motion vector references outside the frame area. When the motion vector references outside the frame area, the motion vector conversion unit 106 converts the reference address of the motion vectors by clipping the reference address to the frame memory that includes the extension area. The motion vector conversion unit 106 then outputs the converted reference address to the memory control unit 300. Here, the reference address resulting from conversion according to clipping is an address indicating a location of the macroblock in the frame memory that includes the extension area closest to the position of the macroblock indicated by the original reference address.

Furthermore, when the reference address references inside the reference frame, the movement vector conversion unit 106 outputs the reference address to the memory control unit 300.

### (F) Padding unit 105

The padding unit 105 receives the decoded data from the motion compensation decoding unit 104, and outputs the received decoded data one pixel at a time to the frame memory 402 via the memory control unit 300. Here, the padding unit 105 obtains, from the decoded data, data of a pixel to be output (hereinafter referred to as "output pixel" or "pixel data"), and judges whether or not the obtained output pixel is data of a boundary pixel. When the output pixel is data of a boundary pixel, the padding unit 105 outputs the output pixel to the frame memory 402, outputting the output pixel to the image are to be displayed during reproduction, and also outputting the output pixel to corresponding locations in the extension area. Note that in the present invention, outputting an output pixel to corresponding locations in the extension area is incorporated in the concept of padding.

When the pixel is not a boundary pixel, the padding unit 105 outputs the output pixel to the frame memory 402 in a conventional manner, outputting the output pixel to the image area that is displayed during reproduction.

Hereinafter, "boundary pixel data" is also simply referred to as a "boundary pixel". Furthermore, the method used for outputting the output pixel to the area of the image displayed during reproduction is a conventional method, an example of which being calculating the address to which the output pixel is to be output, and outputting the output pixel to the frame memory 402 based on the calculated address.

Note that the judgment of whether or not the output pixel is a boundary pixel is made based on the address to which the output pixel is to be output and the size of the image being decoded. Furthermore, the padding unit 105 outputs pixels in a predetermined order.

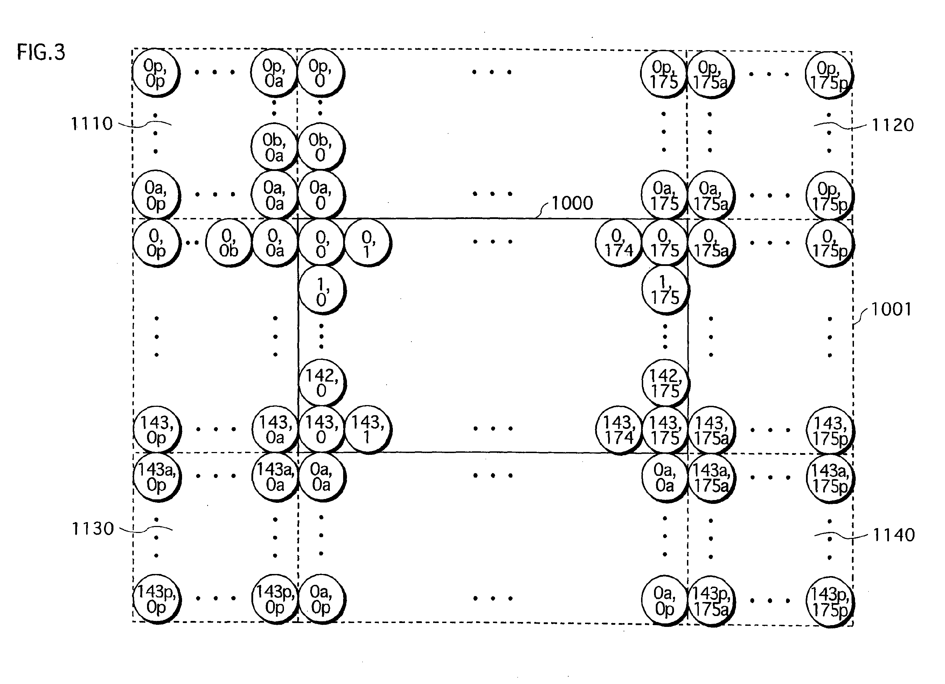

The following describes the procedure for padding to the extension area, with use of FIG. 3.

FIG. 3 shows the format of the image stored in the frame memory 402.

An image area 1000 stores an image to be displayed during reproduction. The image area 1000 is composed of 176 pixels (horizontal) by 144 pixels (vertical), and can be divided in the following manner when the pixel to be output is a boundary pixel. Here, a boundary pixel is a pixel that contacts the inner edge of the frame of the reproduction image. In FIG. 3, the following pixels are boundary pixels: pixels located from pixel (0,0) in a horizontal direction through to pixel (0,175), pixels located from pixel (1,0) in a vertical direction through to pixel (142,0), pixels located from pixel (0,175) in a vertical direction through to pixel (142, 175), and pixels located from pixel (143, 0) in a horizontal direction through to pixel (143,175).

Furthermore, output pixels that are boundary pixels can be divided into eight patterns, the names of each being defined as follows. When the pixel to be output is pixel (0,0), the output pixel is called a first area pixel. When the pixel to be output is pixel (0,175), the output pixel is called a second area pixel. When the pixel to be output is pixel (143,0), the output pixel is called a third area pixel. When the pixel to be output is pixel (143,175), the output pixel is called a fourth area pixel. When the pixel to be output is any of the pixels from pixel (0,1) to pixel (0,174), the output pixel is called a first horizontal pixel. When the pixel to be output is any of the pixels from pixel (143,1) to pixel (143,174), the output pixel is called a second horizontal pixel. When the pixel to be output is any of the pixels from pixel (1,0) to pixel (142,0), the output pixel is called a first vertical pixel. When the pixel to be output is any of the pixels from pixel (1,175) to pixel (142,175), the output pixel is called a second vertical pixel.

When the output pixel is a first area pixel, the first area pixel is output in the following manner to pixel (0a,0) through to pixel (0p,0) which are in a horizontal direction relative to pixel (0,0), to pixel (0,0a) through to pixel (0,0p) which are in a vertical direction relative to pixel (0,0), and to a sectional extension area 1110. First, the padding unit 105 calculates the address of pixel (0a,0) which is directly above pixel (0,0), and, based on the calculated address, outputs the first area pixel to pixel (0a,0). In the same way, the padding unit 105 calculates the address of each of the pixels (0b,0) through to pixel (0p, 0) in the extension area in the vertical direction, and outputs the first area pixel based on the calculated addresses.

Furthermore, the padding unit 105 calculates the address of pixel (0,0a) that is directly left of pixel (0,0), and outputs the first area pixel to pixel (0,0a) based on the calculated address. The padding unit 105 further calculates the address of pixel (0a,0a) that is directly above pixel (0,0a), and outputs the first area pixel to pixel (0a,0a) based on the calculated address. In the same way, the padding unit 105 calculates the address of each of the pixels in the sectional extension area 1110 from pixel (0b,0a) through to pixel (0p,0a) and outputs the first area pixel based on the calculated addresses.

Furthermore, in the same way, the padding unit 105 outputs the second area pixel to pixels located in the vertical direction with respect to pixel (0,175), outputs the second area pixel to pixels located in the horizontal direction with respect to pixel (0,175), and outputs the second area pixel to the sectional extension area 1120. Here, the padding unit 105 outputs the second area pixel rightward in the horizontal direction.

Furthermore, in the same way, the padding unit 105 outputs the third area pixel to pixels located in the vertical direction with respect to pixel (143,0), outputs the third area pixel to pixels located in the horizontal direction with respect to pixel (0,143), and outputs the third area pixel to the sectional extension area 1130. Here, the padding unit 105 outputs the third area pixel downward in the vertical direction.

Furthermore, in the same way, the padding unit 105 outputs the fourth area pixel to each pixel located in the vertical direction with respect to pixel (143,175), outputs the fourth area pixel to the pixels located horizontally with respect to pixel (143,175), and outputs the fourth area pixel to the sectional extension area 1140. Here, the padding unit 105 outputs the fourth area pixel downwards in the vertical direction, and toward the right in the horizontal direction.

When the output pixel is a first horizontal pixel, the padding unit 105 first calculates the address of the pixel that is directly above the boundary pixel, and outputs the first horizontal pixel based on the calculated address. The padding unit 105 performs this operation for each of the sixteen pixels in the extension area in the vertical direction.

The padding unit 105 performs the same operations when the output pixel is a second horizontal pixel. Here, the padding unit 105 outputs the second horizontal pixels downward in the vertical direction.

When the output pixel is a first vertical pixel, the padding unit 105 first calculates the address of the pixel that is directly left of the boundary pixel, and outputs the first vertical pixel based on the calculated address. The padding unit 105 performs this operation for each of the sixteen pixels in the extension area in the horizontal direction.

The padding unit 105 performs the same operations when the output pixel is a second vertical pixel. Here, the padding unit 105 outputs the second vertical pixel rightward in the vertical direction.

In the described method, the boundary pixels may be output to the extension area 1001 when the restored image is output to the frame memory.

### (4) Memory control unit 300

The memory control unit 300 receives encoded data from the input/output unit 200, and outputs the received encoded data to the memory unit 401.

Furthermore, the memory control unit 300 outputs the received encoded series to the variable length decoding unit 101 of the decoding unit 100, and outputs the image restored by the decoding unit 100, one pixel at a time to the frame memory 402.

In addition, the memory control unit 300 receives the reference address of the motion vector from the motion vector conversion unit 106, and obtains the reference data from the reference frame using the received reference address. The memory control unit 401 outputs the obtained reference data to the motion compensation decoding unit 104.

The memory control unit 300 reads the decoded image from the frame memory 402, and outputs the read image to the input/output unit 200.

Note that the memory control unit 300 performs input and output of data with the memory unit 401 and the frame memory 402 by issuing DMA (direct memory access).

### 1.2 Decoding method

The following describes decoding processing performed to decode encoded data.

### 1.2.1 Decoding processing

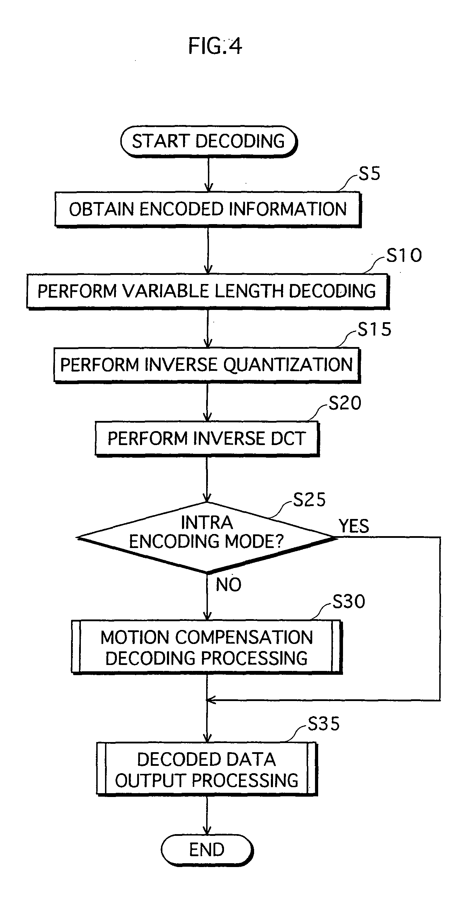

The following describes decoding processing with use of the flowchart in FIG. 4.

The variable length decoding unit 101 obtains an encoded series from the memory unit 401 (step S5), subjects the obtained encoded series to entropy decoding, and obtains the encoding mode, motion vector information, and quantized DCT coefficients (step S10). Next, the inverse quantization unit 102 uses the quantized DCT coefficients obtained at step S10 to restore the DCT coefficients (step S15). The inverse DCT unit 103 uses the DCT coefficients restored at step S15 to restore the pixel spatial data (step S20).

Next, the motion compensation decoding unit 104 judges whether the encoding mode obtained at step S10 is motion compensation prediction mode or intra encoding mode (step S25).

When the motion compensation decoding unit 104 judges the encoding mode to be motion compensation prediction mode ("NO" at step S25), the motion vector conversion unit 106 performs motion compensation decoding processing (step S30), and the padding unit 105 performs decoded data output processing using the decoded data resulting from the motion compensation decoding processing (step S35).

When the motion compensation decoding unit 104 judges the encoding mode to be intra encoding mode ("YES" as step S25), the padding unit 105 performs decoded data output processing using as decoded data the pixel spatial data restored at step S20 (step S35).

Note that decoding of the image is completed by performing this processing for each macroblock in one image. If the size of the image is 176 pixels by 144 pixels, there will be 99 of the sixteen pixel by sixteen pixel macroblocks, and decoding of one image will be complete after performing the decoding processing 99 times.

### 1.2.2 Motion compensation decoding processing

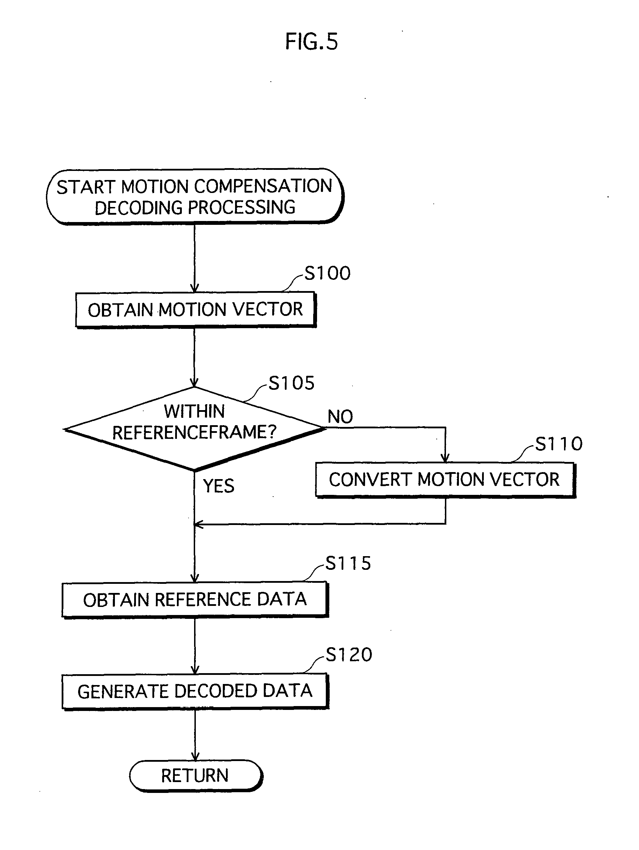

The following describes motion compensation processing, with use of the flowchart in FIG. 5.

The motion vector conversion unit 106 obtains the decoded motion vector obtained by the variable length decoding unit 101 (step S100), and judges whether or not the reference address of the obtained motion vector is within the area of the reference frame (step S105).

When the motion vector conversion unit 106 judges the reference address to be within the area of the reference frame ("YES" at step S105), the motion vector conversion unit 106 obtains reference data from the reference frame (step S115), and uses the obtained reference data and the restored spatial pixel data to generate decoded data (step S120).

When the motion vector conversion unit 106 judges the reference address not to be within the area of the reference frame ("NO" at step S105), the motion vector conversion unit 106 performs clipping so that the reference address is within the area, and converts the reference address (step S110). The motion vector conversion unit 106 then performs step S115 onwards using the converted reference data.

### 1.2.3 Decoded data output processing

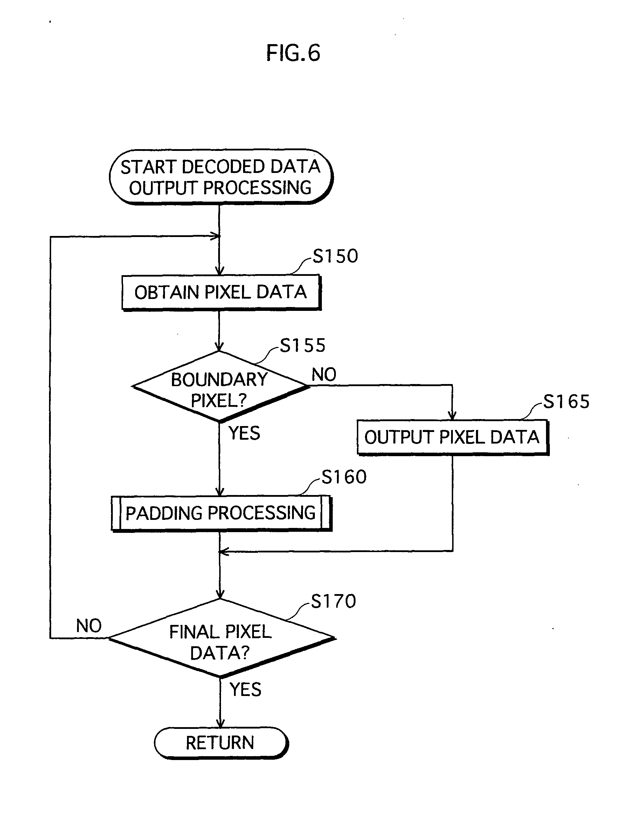

The following describes decoded data output processing, with use of the flowchart in FIG. 6.

The padding unit 105 obtains pixel data from the decoded data (step S150), and judges whether or not the pixel data is a boundary pixel (step S155).

When the padding unit 105 judges the pixel data to be a boundary pixel ("YES" at step S155), the padding unit 105 performs padding processing (step S160). Furthermore, the padding unit 105 judges whether or not the pixel data obtained at step S150 is the final pixel data in the decoded data (step S170). When the padding unit 105 judges that the pixel data is not the final pixel data ("NO" at step S170), the padding unit 105 returns to step S150, obtains the next pixel data, and continues the processing. When the padding unit 105 judges the pixel data to be the final pixel data ("YES" at step S170), the processing ends.

When the padding unit 105 judges the pixel data not to be a boundary pixel ("NO" at step S155), the padding unit 105 outputs the obtained pixel data to the frame memory 402, outputting the pixel data to the image area displayed during reproduction (step S165), and performs step S170.

### 1.2.4 Padding processing

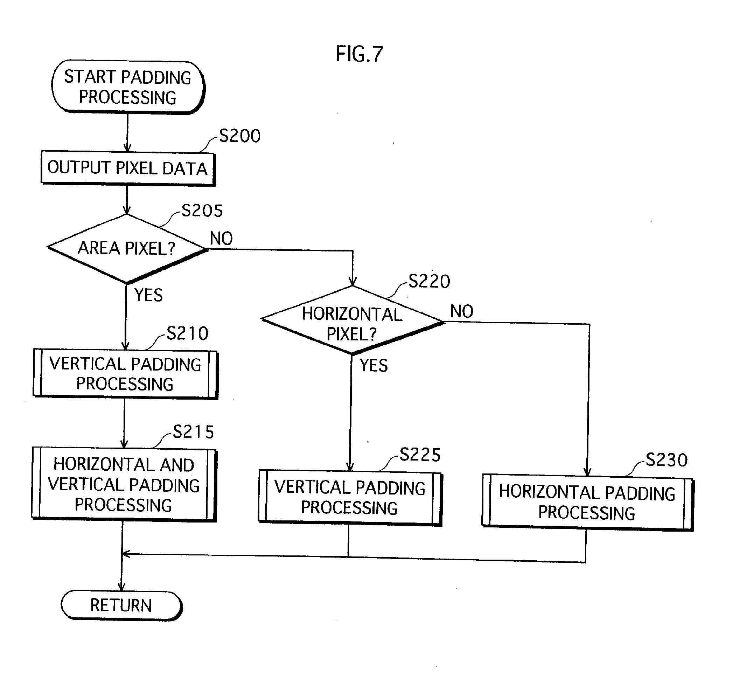

The following describes padding processing, with use of the flowchart in FIG. 7.

The padding unit 105 outputs the pixel data obtained in the decoded data processing to the frame memory 402, outputting the pixel data to the image area displayed during reproduction, and stores the output image data temporarily (step S200).

Next, the padding unit 105 judges whether or not the obtained pixel data is any of a first area pixel, a second area pixel, a third area pixel, and a fourth area pixel (step S205).

When the padding unit 105 judges the pixel data to be one of a first area pixel, a second area pixel, a third area pixel, and a fourth area pixel ("YES" at step S205), the padding unit 105 performs vertical padding processing (step S210), and further performs horizontal and vertical padding processing (step S215).

When the padding unit 105 judges the pixel data not to be one of a first area pixel, a second area pixel, a third area pixel, and a fourth area pixel ("NO" at step S205), the padding unit 105 judges whether the pixel data is one of a first horizontal pixel and a second horizontal pixel (step S220).

When the padding unit 105 judges the pixel data to be one of a first horizontal pixel and a second horizontal pixel ("YES" at step S220), the padding unit 105 performs vertical padding processing (step S225).

When the padding unit 105 judges the pixel data to be neither of a first horizontal pixel and a second horizontal pixel ("NO" at step S220), the padding unit 105 performs horizontal padding processing (step S230).

### 1.2.5 Vertical padding processing

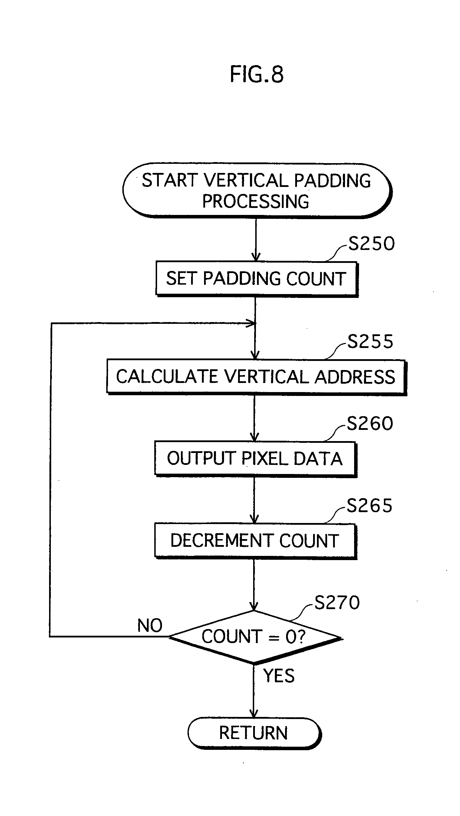

The following describes vertical padding processing, with use of the flowchart in FIG. 8.

The padding unit 105 sets the number of pixels set in the extension area 1001 as a padding count (step S250). The padding count is "16" in the present embodiment.

Next, the padding unit 105 calculates an address in the vertical direction in order to perform padding in the vertical direction (step S255). Based on the calculated address, the padding unit 105 outputs a pixel data temporarily stored at step S200 in the padding processing (step S260).

The padding unit 105 then decrements the padding count by 1 (step S265), and judges whether or not the resulting padding count is "0" (step S270).

When the padding unit 105 judges that the padding count is not "0" ("NO" at step S270), it calculates the next vertical address (step S255), and performs the processing from step S260 onwards.

When the padding unit 105 judges that the padding count is "0" ("YES" at step S270), the processing ends.

Note that when calculating the address at step S255, when the boundary pixel is a first horizontal pixel, a first area pixel, or a second area pixel, the padding unit 105 calculates the addresses upward in the vertical direction, and when the boundary pixel is a second horizontal pixel, a third area pixel, or a fourth area pixel, the padding unit 105 calculates the addresses downward in the vertical direction.

### 1.2.6 Horizontal padding processing

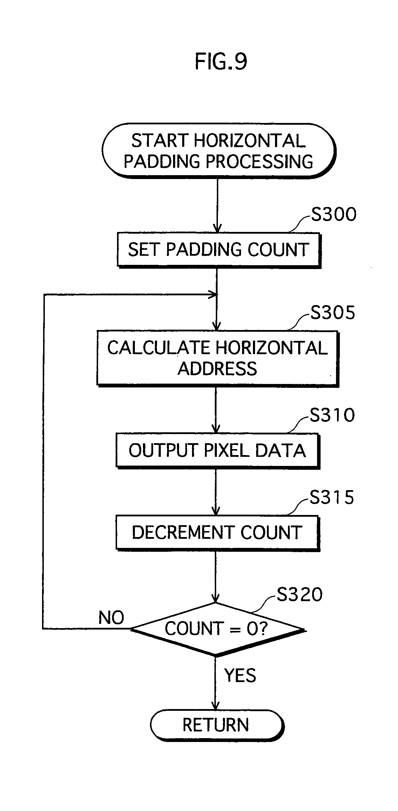

The following describes horizontal padding processing, with use of the flowchart in FIG. 9.

The padding unit 105 sets the number of pixels set in the extension area 1001 as a padding count (step S300). The padding count is "16" in the present embodiment.

Next, the padding unit 105 calculates an address in the vertical direction in order to perform padding in the horizontal direction (step S305). Based on the calculated address, the padding unit 105 outputs a pixel data temporarily stored at step S200 in the padding processing (step S310).

The padding unit 105 then decrements the padding count by 1 (step S315), and judges whether or not the resulting padding count is "0" (step S320).

When the padding unit 105 judges that the padding count is not "0" ("NO" at step S320), it calculates the next horizontal address (step S305), and performs the processing from step S310 onwards.

When the padding unit 105 judges that the padding count is "0" ("YES" at step S320), the processing ends.

Note that when calculating the addresses at step S305, when the boundary pixel is a first vertical pixel, the padding unit 105 calculates the addresses leftward in the horizontal direction, and when the boundary pixel is a second vertical pixel, the padding unit 105 calculates the addresses rightward in the horizontal direction.

### 1.2.7 Horizontal and vertical padding processing

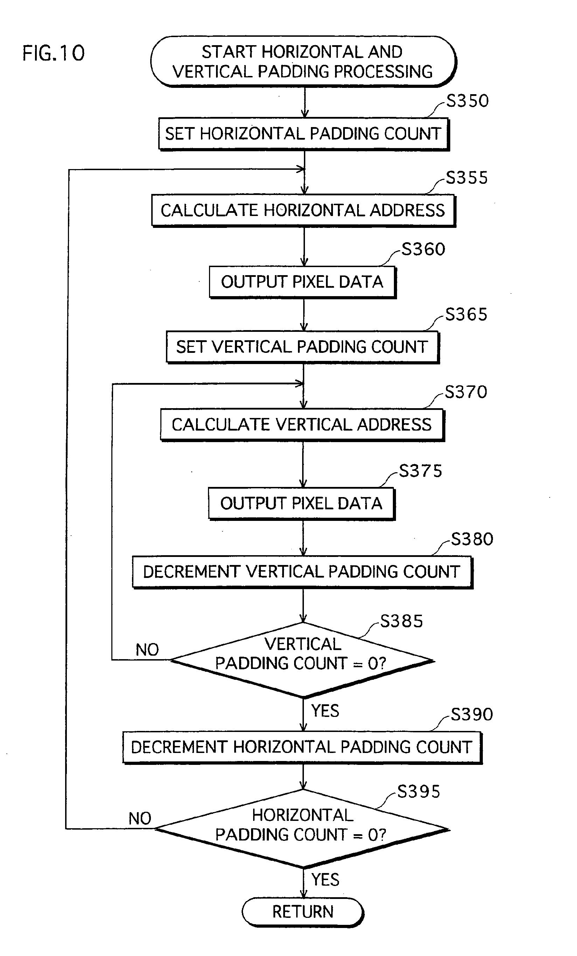

The following describes horizontal and vertical padding processing, with use of the flowchart in FIG. 10.

The padding unit 105 sets the number of pixels set in the extension area 1001 as a horizontal padding count (step S350). The horizontal padding count is "16" in the present embodiment.

Next, the padding unit 105 calculates an address in the horizontal direction in order to perform padding in the horizontal direction (step S355). Based on the calculated address, the padding unit 105 outputs the pixel data temporarily stored at step S200 in the padding processing (step S360).

The padding unit 105 sets the number of pixels in the extension area 1001 as a vertical padding count (step S365). The vertical padding count is "16" in the present embodiment.

Next, the padding unit 105 calculates an address in the vertical direction in order to perform padding in the vertical direction (step S370). Based on the calculated address, the padding unit 105 outputs the pixel data temporarily stored at step S200 in the padding processing (step S375).

The padding unit 105 then decrements the vertical padding count by 1 (step S380), and judges whether or not the resulting vertical padding count is "0" (step S385).

When the padding unit 105 judges that the padding count is not "0" ("NO" at step S385), it calculates the next vertical address (step S370), and performs the processing from step S375 onwards.

When the padding unit 105 judges that the vertical padding count is "0" ("YES" at step S385), it decrements the horizontal padding count by 1 (step S390), and judges whether or not the resulting horizontal padding count is "0" (step S395).

When the padding unit 105 judges that the horizontal padding count is not "0" ("NO" at step S395), it calculates the next horizontal address (step S355), and performs the processing from step S360 onwards.

When the padding unit 105 judges that the horizontal padding count is "0" ("YES" at step S395), the processing ends.

Note that when calculating the horizontal address at step S355, when the boundary pixel is a first area pixel or a third area pixel, the padding unit 105 calculates the addresses leftward in the horizontal direction, and when the boundary pixel is a second area pixel or a fourth area pixel, the padding unit 105 calculates the addresses rightward in the horizontal direction. Furthermore, when calculating the vertical address at step S370, when the boundary pixel is a first area pixel or a second area pixel, the padding unit 105 calculates the addresses upward in the vertical direction, and when the boundary pixel is a third area pixel or a fourth area pixel, the padding unit 105 calculates the addresses downward in the vertical direction.

### 1.2.8 Summary of decoding processing

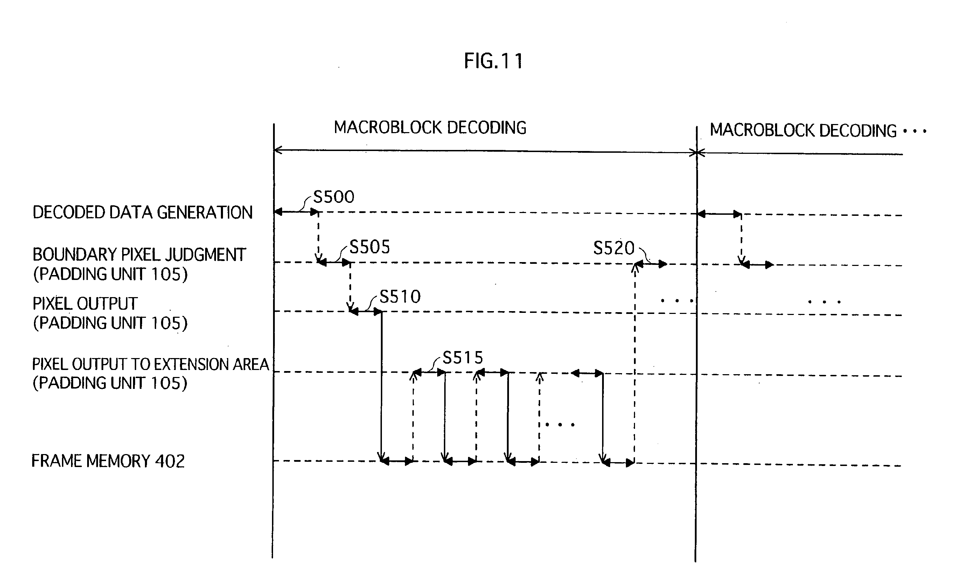

The following describes the video decoding processing, with use of the timing diagram in FIG. 11.

The decoding unit 100 uses the variable length decoding unit 101, the inverse quantization unit 102, the inverse DCT unit 103, the motion compensation decoding unit 104, and the motion vector conversion unit 106 to generate decoded data from the encoded string obtained from the memory unit 401, and uses the variable length decoding unit 101, the inverse quantization unit 102, the inverse DCT unit 103, and the motion compensation decoding unit 104 to generate decoded data from the encoded string obtained from the memory unit 401 (step S500).

The padding unit 105 obtains one pixel of data from the decoded data output to the frame memory 402, and judges whether or not he obtained pixel data is a boundary pixel (step S505).

Next, when the padding unit 105 judges the obtained pixel data to be a border pixel, the padding unit 105 outputs the obtained pixel data to the frame memory 402 via the memory control unit 300, and also temporarily stores the pixel data (step S510). Here, the memory control unit 300 issues DMA to control input and output of data between the padding unit 105 and the frame memory 402. Next, the padding unit 105 outputs the temporarily stored pixel data to a corresponding position in the extension area 1001 (step S515). The padding unit 105 completes the padding processing by performing step S515 a predetermined number of times. When the padding processing is complete, the padding unit 105 obtains the next pixel data, judges whether or not the obtained pixel data is a boundary pixel (step S520), and performs output of the obtained pixel data and subsequent processing.

Furthermore, when the padding unit 105 judges that the pixel data obtained at step S505 is not a boundary pixel, the padding unit 105 outputs the obtained pixel data at step S510, obtains the next pixel data to be output, judges whether or not the obtained pixel data is a boundary pixel (step S520), and performs output of the obtained pixel data and subsequent processing.

By performing the described operations a number of times equal to the number of pixels in the macroblock, output of decoded data to the frame memory 402 and output of decoded data to corresponding positions in the extension area 1001 are complete.

By further performing the described processing for each macroblock, one image is restored.

In this way, each time one macroblock of data is decoded and output to the frame memory 402, when boundary pixels are included in the data of the decoded macroblock, padding processing to the extension area is performed by outputting the boundary pixels to the corresponding positions in the extension area 1001.

Note that since in FIG. 11 the decoding processing is described as being performed focusing on one macroblock, the decoding processing is shown such that after all pixels of the macroblock are output, the next macroblock is restored. However, ordinarily, as soon as the decoded data is generated, processing for generating the next decoded data commences.

### 1.3 Summary of the first embodiment

As has been described, according to the first embodiment, when outputting one macroblock of decoded data to the frame memory, padding processing to the extension area is performed when boundary pixels exist in the decoded data. For this reason, it is unnecessary to read boundary pixels from the frame memory, and therefore the number of times the frame memory is accessed is low in comparison with when padding processing to the extension area is performed after decoding the image. For example, when the image size is 176 pixels by 144 pixels, the number of boundary pixels is 636. With conventional padding processing to the extension area, 636 readings of boundary pixels from the frame memory are necessary. However, this number is reduced by the present invention.

In addition, since the reference frame is padded to the extension area in advance, when decoding an image, if the motion vector references outside a reference area that includes the extension area, the video can be decoded referring to outside the area, with only motion vector clipping processing. This lightens processing for motion compensation decoding.

Furthermore, by performing padding processing to the extension area when outputting decoded data to the frame memory, the necessity to read boundary pixels from the frame memory is eliminated, and therefore the number of times the frame memory is accesses is low compared to a conventional method. As a result, processing for image decoding is lightened, and the memory band width of the frame memory can be reduced.

Furthermore, a large processing load is incurred when software is used to implement the method in which detection of pixels outside of the area and copying of boundary pixels are performed according to motion vectors when motion compensation is performed during image decoding. Similarly, when the method is to be implemented using hardware, the scale of the circuits is increased, and costs increase. With the present invention, since only clipping processing of motion vectors is necessary when the motion vector references outside the reference area that includes the extension area, motion compensation decoding processing can be simplified. This leads to lightening of the processing load, and prevents increase in circuit size, and therefore avoids increased costs.

### 1.3.1 Modifications of the first embodiment

Although the present invention has been described based on a first embodiment, the present invention is not limited to the first embodiment. The following cases are included in the present invention.
(1) In the first embodiment, when outputting decoded data to the frame memory one pixel at a time, each pixel is output after it is judged whether or not the pixel is a boundary pixel, but the present invention is not limited to this structure. The judgment as to whether the pixel is a boundary pixel may be made after the pixel is output, and when the pixel is a boundary pixel, padding processing may be performed using the output pixel data. When the padding processing is complete, or when the pixel is not a boundary pixel, the next pixel is obtained from the decoded data, and the same processing is repeated. The flow of processing in such as case is described with use of FIG. 6 and FIG. 7.
   At step S150, the padding unit obtains a pixel to be output to the frame memory from the decoded data. Next, before performing step S155, the padding unit outputs the obtained pixel to the frame memory, and temporarily stores the output pixel. At step S155, the padding unit judges whether or not the temporarily stored pixel is a boundary pixel.
   When the pixel is not a boundary pixel, the padding unit omits step S165, and performs the processing from step S170 onwards. When the padding unit judges the pixel to be a boundary pixel, it performs step S160 onwards.
   Furthermore, in the padding processing, the padding unit omits step S200, and performs step S205 onwards.
(2) The decoded data is not limited to being output to the frame memory one pixel at a time in the first embodiment. Instead, the decoded data may be output to the frame memory according to burst transfer.
   Such a structure is implemented in the following manner. First, the padding unit outputs sixteen pixels of data to the frame memory, and temporarily stores the sixteen pixels. Here, the sixteen pixels are data of one horizontal row. Next, the padding unit judges whether any boundary pixels are included in the stored data, and if so, performs padding processing. After completing the padding processing, and when there are no boundary pixels in the stored data, the padding unit outputs the next sixteen pixels of data to the frame memory, and performs the described operations. Repeating these operations completes output of one macroblock of decoded data, and padding of the output decoded data to the corresponding extension area. Here, if the macroblock consists of 16 pixels by 16 pixels, the padding unit performs the processing sixteen times.
   Alternatively, the structure may be implemented in the following manner. First, the padding unit obtains sixteen pixels of data, the sixteen pixels being of one horizontal row, and judges whether or not any boundary pixels are included in the obtained sixteen pixels of data.
   When boundary pixels are included, the padding unit outputs the obtained data to the frame memory and stores the data temporarily. Next, the padding unit uses the stored data to perform padding processing, and when padding processing is complete, performs the same processing for the next sixteen pixelsofdata. When no boundary pixels are included, the padding unit outputs the obtained data to the frame memory, obtains the next sixteen pixels of data and performs the same processing. Repeating these operations completes output of one macroblock of decoded data, and padding of the output decoded data to the corresponding extension area. Here, if the macroblock consists of 16 pixels by 16 pixels, the padding unit performs the processing sixteen times.
   Furthermore, the data is not limited to being transferred pixel by in the two above-described examples, and may be transferred in other numbers of pixels.
   The padding processing may be implemented according to the method of the first embodiment, in units of boundary pixels included in the output data.
   Furthermore, padding processing may be implemented by outputting output pixel data to the area to which pixels are to be output in groups of boundary pixels, according to burst transfer. In such a case, an address of a reference pixel is calculated, and burst transfer is performed using the calculated address as a reference. Padding processing in this case is performed as follows. When a boundary pixel is a first horizontal pixel, the padding unit calculates the address of the pixel directly above the boundary pixel, and burst transfers output pixels of sixteen pixels upward in the vertical direction using the calculated address as a reference. When the boundary pixel is a second horizontal pixel, the padding unit calculates the address of the pixel directly below the boundary pixel, and burst transfers output pixels of sixteen pixels upward in the vertical direction using the calculated address as a reference. Furthermore, when the boundary pixel is a first vertical pixel, the padding unit calculates the address of the pixel directly to the left of the boundary pixel, and burst transfers output pixels of sixteen pixels leftward in the horizontal direction using the calculated address as a reference. When the boundary pixel is a second vertical pixel, the padding unit calculates the address of the pixel directly to the right of the boundary pixel, and burst transfers the output pixels of sixteen pixels rightward in the horizontal direction using the calculated address as a reference. Furthermore, when the boundary pixel is a first area pixel, the padding unit first calculates the address of the pixel directly above the boundary pixel, and burst transfers output pixels of sixteen pixels upward in the vertical direction using the calculated address as a reference. The padding unit then calculates the address of the pixel directly to the left of the boundary pixel, and burst transfers output pixels of sixteen pixels leftward in the horizontal direction using the calculated address as a reference. Next, after outputting leftward in the horizontal direction, the padding unit calculates the pixel address directly above the reference pixel, and then burst transfers the output pixels of sixteen pixels leftward in the horizontal direction using the newly calculated address as a reference. By repeating these operations, the padding unit is able output the boundary pixel which is a first area pixel to the extension area. Note that when the boundary pixel is a second area pixel, output is performed using a method that differs from that for a first area pixel only in terms of the horizontal direction in which output is performed, and therefore a description is omitted. Furthermore, when the boundary pixel is a third area pixel, output is performed using a method that differs from that for a first area pixel only in terms of the vertical direction in which is output is performed, and therefore a description is omitted. Furthermore, when the boundary pixel is a fourth area pixel, output is performed using a method that differs from that for a first area pixel only in terms of the vertical and horizontal directions in which output is performed, and therefore a description is omitted.
   Furthermore, when the boundary pixel is a first area pixel, the padding unit may output output pixels by burst transferring all pixels that are to be output. This method may also be used when the boundary pixel is any of the other area pixels.
(3) The padding unit is not limited to being incorporated in the decoding unit as described in the first embodiment. The padding unit may instead be incorporated in the external memory.
   In this case, the padding unit incorporated in the external memory receives information of a pixel to be output to the frame memory from the data decoded by the motion compensation decoding unit and the address to which the pixel is to be output, via the memory control unit, and performs the decoded data output processing shown in FIG. 6 using the received information.
   This lightens the load of inputting and outputting to and from the memory control unit, since it is unnecessary for data of pixels output to the extension area to pass through the memory control unit.
(4) The padding unit performs output and padding processing of output pixels for each piece of decoded data in the first embodiment, but is not limited to doing so.
   Instead, the padding unit may store two or more pieces of decoded data, and perform outputting of output pixels and padding processing using the stored plurality of pieces of decoded data.
   Furthermore, the padding unit may have a buffer for decoded data and pixel data to be output to the extension area. Here, the padding unit stores the decoded data in the buffer. The padding unit judges whether or not the stored decoded data includes any boundary pixels, and when the decoded data is judged to include boundary pixels, generates pixels to output to the extension area, and stores the generated pixels in the buffer. The padding unit outputs the pixel data stored in the buffer to the frame memory via the memory control unit one pixel at a time.
   Furthermore, the padding unit may have a buffer formatted in the same way as the image stored in the frame memory.
   Here, the padding unit stores the decoded data in the buffer. The padding unit judges whether or not any boundary pixels are included in the stored decoded data, and when the decoded data is judged to include any boundary pixels, stores the boundary pixels in the extension area in the buffer. The padding unit performs these operations until completing decoding of one image, and then outputs the data stored in the buffer, in other words one image of data and data of the extension area, to the frame memory via the memory control unit one pixel at a time.
(5) The first embodiment and any of the modifications thereof may be combined.

### 2. Second Embodiment

A mobile telephone 1A of the second embodiment differs from the first embodiment in terms of the structure of an image processing unit 10A. The following describes the image processing unit 10A of the second embodiment.

### 2.1 Image processing unit 10A

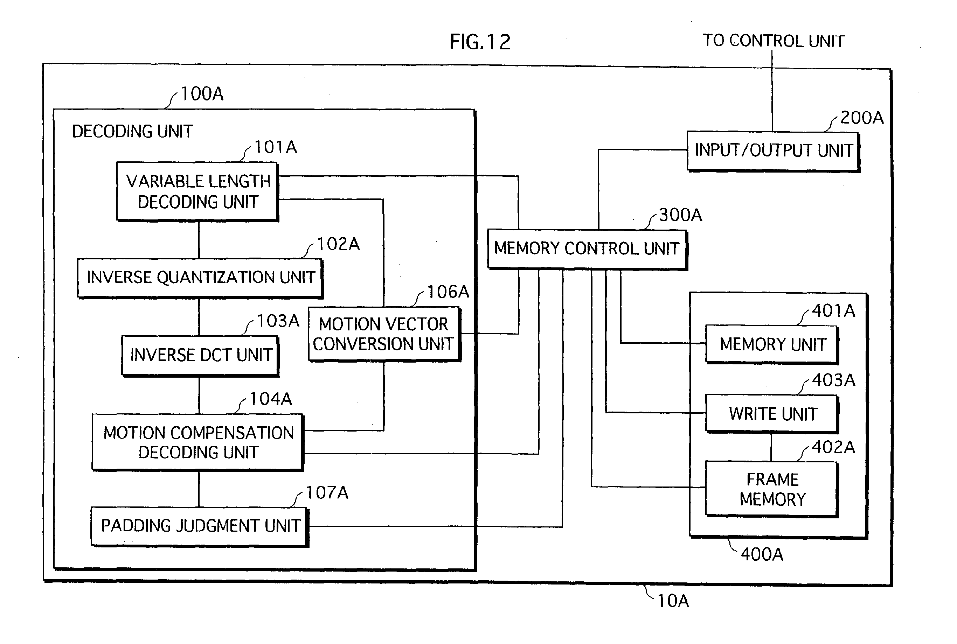

The image processing unit 10A, as shown in FIG. 12, is composed of a decoding unit 100A, an input/output unit 200A, a memory control unit 300A, and an external memory 400A.

### (1) External memory 400A

The external memory 400A has a memory unit 401A, a frame memory 402A, and a write unit 403A. Here, the external memory 400A is a DRAM.

The memory unit 401A and the frame memory 402A are the same as the memory unit 401 and the frame memory 402 in the first embodiment, and therefore are omitted from the present description.

### (A) Write unit 403A

The write unit 403A receives an output pixel of a decoded image, an output address of the output pixel, and information relating to the output pixel, from the decoding unit 100 via the memory control unit 300A. Here, the output address is an address indicating the location to which the output pixel is to be output in the area of the image displayed during reproduction.

Furthermore, the information relating to the output pixel is one of the following information. When the received output pixel is a first area pixel, the information is first area pixel information indicating the output pixel is a first area pixel. When the received output pixel is a second area pixel, the information is second area pixel information indicating the output pixel is a second area pixel. When the received output pixel is a third area pixel, the information is third area pixel information indicating the output pixel is a third area pixel. When the received output pixel is a fourth area pixel, the information is fourth area pixel information indicating the output pixel is a fourth area pixel. When the received output pixel is a first horizontal pixel, the information is first horizontal pixel information indicating the output pixel is a first horizontal pixel. When the received output pixel is a second horizontal pixel, the information is second horizontal pixel information indicating the output pixel is a second horizontal pixel. When the received output pixel is a first vertical pixel, the information is first vertical pixel information indicating the output pixel is a first vertical pixel. When the received output pixel is a second vertical pixel, the information is second vertical pixel information indicating the output pixel is a second vertical pixel.

The write unit 403A writes the output pixel to the frame memory 402A based on the received address.

The write unit 403A judges whether the received information is non-boundary pixel information, and if the information is j udged to be non-boundary pixel information, ends the operations.

When the received information is judged not to be non-boundary pixel information, the write unit 403A judges whether or not the received information is any of first area pixel information, second area pixel information, third area pixel information, and fourth area pixel information. When the judgment is affirmative, the write unit 403A outputs the output pixel (here, the output pixel is either a first, second, third or fourth area pixel) to the corresponding location in the extension area, based on the received information. The method for outputting the first, second, third or fourth area pixel to the corresponding location in the extension area is the same as for the first embodiment, and therefore is omitted from the present description.

When the judgment is negative, the write unit 403A judges whether the received information is one of first horizontal information and second horizontal information. When this judgment is affirmative, the write unit 403A outputs the output pixel (here, the output pixel is either a first horizontal pixel or a second horizontal pixel) to the corresponding location in the extension area, based on the received information. The method for outputting the first and second horizontal pixels to the corresponding locations in the extension area is as described in the first embodiment, and is therefore omitted from the present description. When the judgment is negative, the write unit 403A outputs the output pixel (here, the output pixel is either a first or second vertical pixel) to the corresponding location in the extension area. The method for outputting the first and second vertical pixels to the corresponding locations in the extension area is as described in the first embodiment, and is therefore omitted from the present description.

According to the described operations, the write unit 403A is outputs (copies) the image decoded by the decoding unit 100A to extension area when outputting the decoded image to the frame memory 402A.

### (2) Input/output unit 200A

The input/output unit 200A is the same as the input/output unit 200 of the first embodiment, and therefore a description thereof is omitted.

### (3) Decoding unit 100A

The decoding unit 100A has a variable length decoding unit 101A, an inverse quantization unit 102A, an inverse DCT unit 103A, a motion compensation decoding unit 104A, a motion vector conversion unit 106A, and a padding judgment unit 107A.

The decoding unit 100A decodes an image in macroblock units, each macroblock unit consisting of sixteen pixels by sixteen pixels.

The variable length decoding unit 101A, the inverse quantization unit 102A, the inverse DCT unit 103A, the motion compensation decoding unit 104A, and themotion vector conversion unit 106A are the same as the variable length decoding unit 101, the inverse quantization unit 102, the inverse DCT unit 103, the motion compensation decoding unit 104, and the motion vector conversion unit 106 of the first embodiment, and therefore descriptions thereof are omitted.

The following describes the padding judgment unit 107A.

The padding judgment unit 107A receives decoded data from the motion compensation decoding unit 104A, and outputs the received decoded data one pixel at a time to the write unit 403A via the memory control unit 300A.

The padding judgment unit 107A obtains an output pixel from the decoded data, judges whether the obtained output pixel is a boundary pixel, and when the obtained output pixel is judged to be a boundary pixel, further judges whether or not the output pixel any of a first, second, third or fourth area pixel. When the judgment is affirmative, the padding judgment unit 107A generates information corresponding to the area pixel. For example, when the output pixel is a first area pixel, the padding judgment unit 107A generates first area pixel information, when the output pixel is a second area pixel, the judgment unit 107A generates second area pixel information, and when the output pixel is a third area pixel, the judgment unit 107A generates third area pixel information. The padding unit 107A outputs the output pixel, the address to which the output pixel is to be output, and the generated information to the write unit 403A via the memory control unit 300A.

When the judgment is negative, the padding judgment unit 107A further judges whether the output pixel is either a first or second horizontal pixel. When the judgment is affirmative, the padding judgment unit 107A generates information corresponding to the horizontal pixel. For example, when the output pixel is a first horizontal pixel, the padding judgment unit 107A generates first horizontal pixel information, and when the output pixel is a second horizontal pixel, the padding judgment unit 107A generates second horizontal pixel information. The padding judgment unit 107A outputs the output pixel, the address to which the output pixel is to be output, and the generated information to the write unit 403A via the memory control unit 300A. When the judgment is negative, the padding unit 107A generates information corresponding to a vertical pixel. For example, when the output pixel is a first vertical pixel, the padding judgment unit 107A generates first vertical pixel information, and when the output pixel is a second vertical pixel, the padding judgment unit 107A generates second vertical pixel information. The padding judgment unit 107A outputs the output pixel, the address to which the output pixel is to be output, and the generated information to the write unit 403A via the memory control unit 300A.

When the padding judgment unit 107A judges the output pixel not to be a boundary pixel, the padding output unit 107A generates non-boundary pixel information, and outputs the output pixel, the address to which the output pixel is to be output, and the generated non-boundary pixel information to the write unit 403A via the memory control unit 300A.

The padding judgment unit 107A outputs the decoded data to the write unit 403A by performing the described operations the same number of times as pixels in the decoded data.

### (4) Memory control unit 300A

The memory control unit 300A receives encoded data from the input/output unit 200A, and outputs the received encoded data to the memory unit 401A.

Furthermore, the memory control unit 300A outputs an encoded series received from the memory unit 401A to the variable length decoding unit 101A of the decoding unit 100A.

The memory control unit 300A receives an output pixel, an address to which the pixel is to be output, and information relating to the pixel from the padding judgment unit 107A, and outputs the received output pixel, address and information to the write unit 403A.

In addition, the memory control unit 300A, on receiving a motion vector reference address from the motion vector conversion unit 106A, obtains reference data from a reference frame with use of the received reference address, and outputs the obtained reference data to the motion compensation decoding unit 104A.

The memory control unit 300A reads a decoded image from the frame memory 402A, and outputs the read image to the input/output unit 200A.

Note that the memory control unit 300A performs input and output of data with the memory unit 401A and input and output of data with the frame memory 402A by issuing DMA.

### 2.2 Decoding method

The following describes decoding processing for decoding encoded data.

Note that decoding processing is the same as in the first embodiment, and therefore a description thereof is omitted here.

Furthermore, motion compensation decoding processing in the decoding processing is also the same an in the first embodiment, and therefore a description thereof is omitted here.

The following describes decoded data output processing in the decoding processing and write processing performed by the write unit 403A.

### 2.2.1 Decoded data output processing

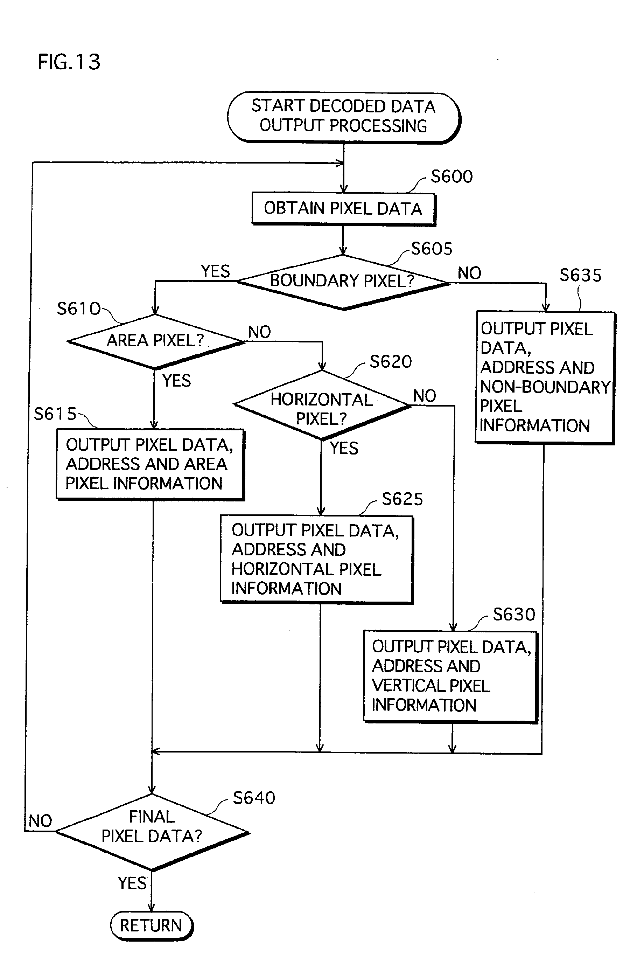

The following describes decoded data output processing with use of the flowchart in FIG. 13.

The padding judgment unit 107A obtains pixel data from decoded data (step S600), and judges whether or not the obtained pixel data is a boundary pixel (step S605).

When the pixel data is judged to be a boundary pixel ("YES" at step S605), the padding judgment unit 107A judges whether the output pixel is any of a first, second, third, or fourth area pixel (step S610). When the judgment is affirmative ("YES" at step S610), the padding judgment unit 107A generates information corresponding to the area pixel, and outputs the generated information, the pixel data, and the address to the write unit 403A via the memory control unit 300A (step S615). The padding judgment unit 107A then judges whether or not the obtained pixel data is the final pixel data (step S640), and if the pixel data is judged to be the final pixel data ("YES" at step S640), ends the processing. If the pixel data is judged not to be the final pixel data ("NO" at step S640), the padding judgment unit 107A returns to step S600, obtains the next pixel data, and continues the processing.

When the pixel data is judged not to be a boundary pixel ("NO" at step S610), the padding unit 107A judges whether or not the output pixel is either a first or second horizontal pixel (step S620). When the judgment is affirmative ("YES" at step S620), the padding unit 107A generates information corresponding to the horizontal pixel, outputs the generated information, the pixel data, and the address to the write unit 403A via the memory control unit 300A (step S625), and executes the processing at step S640.

When the judgment is negative ("NO" at step S620), the padding judgment unit 107A generates information corresponding to a vertical pixel, outputs the generated information, the pixel data, and the address to the write unit 4 03A via the memory control unit 300A (step S630), and executes the processing at step S640.

When the output pixel is judged not to be a boundary pixel ("NO" at step S605), the padding judgment unit 107A generates non-boundary pixel information, outputs the generated non-boundary pixel information, the pixel data, and the address to the write unit 403A via the memory control unit 300A (step S635), and executes the processing at step S640.

### 2.2.2 Write processing

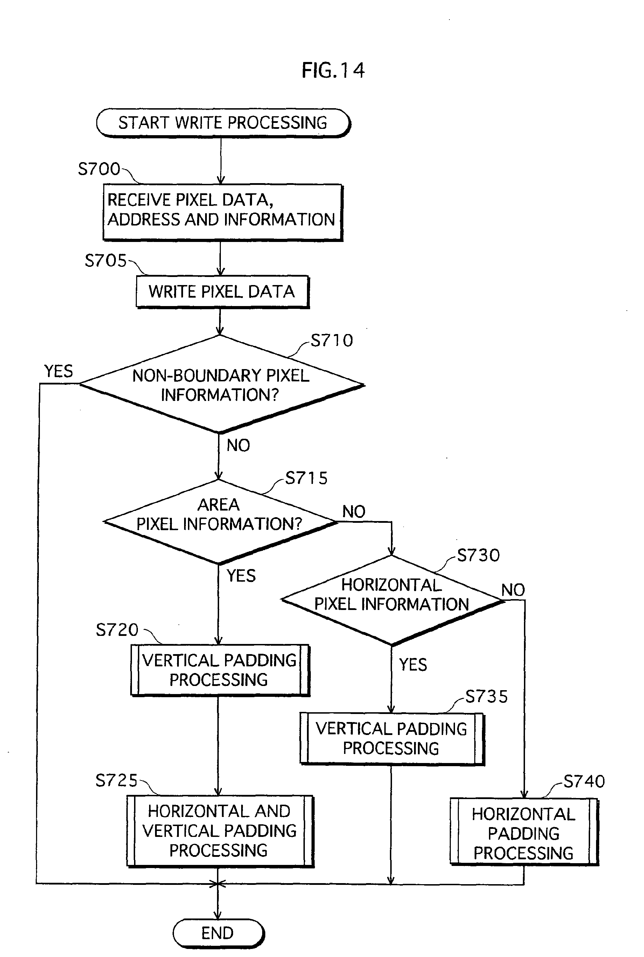

The following describes write processing performed by the write unit 403A, with use of the flowchart in FIG. 14.

The write unit 403A receives pixel data of a decoded image, an address to which the pixel data is to be output, and information relating to the pixel data, from the decoding unit 100A via the memory control unit 300A (step S700).

The write unit 403A writes the pixel data to the frame memory 402A based on the received address (step S705).

The write unit 403A judges whether or not the received information is non-boundary pixel information (step S710), and when the received information is judged to be non-boundary pixel information ("YES" at step S710), ends the operations.

When the received information is judged not to be a non-boundary pixel ("NO" at step S710), the write unit 403A judges whether or not the received information is first area pixel information, second area pixel area information, third area pixel information, or fourth area pixel information (step S715). When the judgment is affirmative ("YES" at step S715), the write unit 403A performs vertical padding processing with use of the received pixel data (here, the received pixel data is either a first, second, third or fourth area pixel) , based on the received information (step S720), and then performs horizontal and vertical padding (step S725).

When the judgment is negative ("NO" step S715), the write unit 403A judges whether the received information is either a first horizontal pixel or a second horizontal pixel (step S730). When the judgment is affirmative ("YES" at step S730), the write unit 403 performs vertical padding processing with use of the received pixel data (here, the received pixel data is either a first or second horizontal pixel) (step S735). When the judgment is negative ("NO" at step S730), the write unit 403A performs horizontal padding processing using the received pixel data (here, the pixel data is either a first or second vertical pixel) (step S740).

Note that vertical padding processing, horizontal padding processing, and horizontal and vertical padding processing performed in the write processing are the same as in the first embodiment, and therefore a description thereof is omitted here.

### 2.3 Summary of the second embodiment

As has been described, according to the second embodiment, when outputting one macroblock of decoded data to the frame memory, padding processing to the extension area is performed when boundary pixels exist in the decoded data. For this reason, it is unnecessary to read boundary pixels from the frame memory, and therefore the number of times the frame memory is accessed is low in comparison with when padding processing to the extension area is performed after decoding the image.

In addition, since the reference frame is padded to the extension area in advance, when decoding an image, if the motion vector references outside the reference area that includes the extension area, the video can be decoded referring to outside the area, with only clipping processing of the movement vector. This lightens processing for motion compensation decoding.

Furthermore, since padding processing to the extension area is performed by the write unit 403A of the external memory 400A, it is unnecessary for the decoding unit 100A to output pixel data to the external memory 400A every time pixel data is output to the extension area. Therefore, traffic between the external memory 400A and the decoding unit 100A is lightened.

### 2.3.1 Modifications of the second embodiment

Although the present invention has been described based on a second embodiment, the present invention is not limited to the second embodiment. The following cases are included in the present invention.
(1) The address to which the pixel data is to be output (copied) in the extension area (hereinafter, called the "copy address") is not limited to being calculated by the writing unit 403A in the padding processing.
   Instead, when the pixel data is a boundary pixel, the padding judgment unit 107A calculates all the copy addresses, and outputs the output address of the pixel data and all the calculated copy addresses to the write unit 403A. The write unit 403A writes the image data to the frame memory 402A based on the output address and the all the copy addresses of the image data.
   The following descries this decoding data output processing, with use of FIG. 13. Note that only the changes in the decoded data output processing are described.
   After executing step S605, when the pixel data is judged not to be a boundary pixel, the padding judgment unit 107A outputs the pixel data and the output address of the pixel data to the write unit 403A, instead of performing step S635.
   After executing step S610, when the pixel data is judged to be a boundary pixel, the padding judgment unit 107A calculates all the copy addresses of the pixel data and outputs the pixel data, the output address of the pixel data, and all the calculated addresses to the write unit 403A, instead of performing step S615.
   After executing step S620, when the pixel data is judged to be a horizontal pixel, the padding judgment unit 107A calculates all the copy addresses of the pixel data and outputs the pixel data, the output address of the pixel data, and all the calculated addresses to the write unit 403A, instead of performing step S625.
   After executing step S620, when the pixel data is judged to be a vertical pixel, the padding judgment unit 107A calculates all the copy addresses of the pixel data and outputs the pixel data, the output address of the pixel data, and all the calculated addresses to the write unit 403A, instead of performing step S630.
   The following describes the changes in writing processing with use of FIG. 14. At step S700, the writing unit 403A receives the pixel data and one or more address from the padding judgment unit 107A. The writing unit 403A writes the received pixel data to the frame memory based on the received one or more address at step S705.
(2) The decoded data is not limited to being output to the frame memory one pixel at a time in the second embodiment. Instead, the decoded data may be output to the frame memory according to burst transfer.
   Note that since burst transferring can be implemented as described in modification (2) in the first embodiment, a description is omitted here.
(3) The write unit 403A is not limited to being provided in the external memory 400A, and may be provided in the memory control unit 300A.
(4) The second embodiment and any of the modifications thereof may be combined.

### 3. Third Embodiment

A mobile telephone 1B of the third embodiment differs from the first and second embodiments in terms of the structure of an image processing unit 10B. The following describes the image processing unit 10B of the third embodiment.

### 3.1 Image processing unit 10B

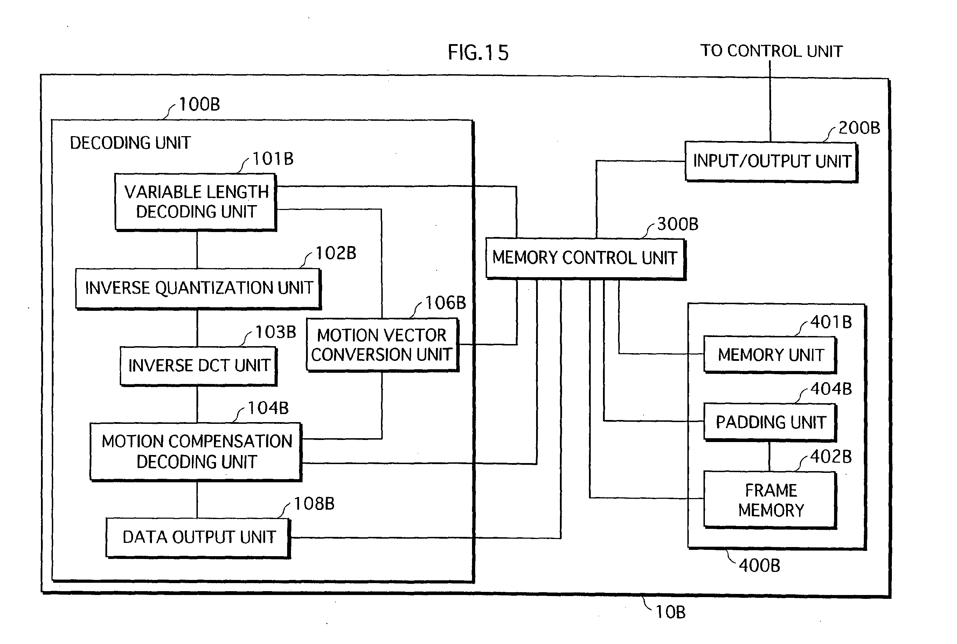

The image processing unit 10B, as shown in FIG. 15, is composed of a decoding unit 100B, an input/output unit 200B, a memory control unit 300B, and an external memory 400B.

### (1) External memory 400B

The external memory 400B has a memory unit 401B, a frame memory 402B, and a padding unit 404B. Here, the external memory 400B is a DRAM.

The memory unit 401B and the frame memory 402B are the same as the memory unit 401 and the frame memory 402 in the first embodiment, and therefore are omitted from the present description.

### (A) Padding unit 404B

The padding unit 404B receives pixel data of a decoded image and an output address of the pixel data from the decoding unit 100B via the memory control unit 300B. Here, the output address is an address indicating a location in the image area displayed during reproduction to which the output pixel is to be output.

The padding unit 404B judges whether or not the received output pixel is a boundary pixel.

When the received pixel is judged not to be a boundary pixel, the padding unit 404B writes the received output pixel to the frame memory 402B based on the received address.

When the received output pixel is judged to be a boundary pixel, the padding unit 404B first writes the received output pixel to the frame memory 402B based on the received address, and then performs the following operations.

The padding unit 404B judges whether or not the received pixel is any of a first area pixel, a second area pixel, a third area pixel, or a fourth area pixel. When the judgment is affirmative, the padding unit 404B performs padding to the extension area with use of the output pixel. The methods for padding using the first, second, third, and fourth area pixels are the same as in the first embodiment, and are therefore descriptions thereof are omitted here.

When the judgment is negative, the padding unit 404B judges whether or not the received output pixel is either a first horizontal pixel or a second horizontal pixel. When the judgment is affirmative, the padding unit 404B performs padding to the extension area using the output pixel. The methods for padding using first and second horizontal pixels are the same as in the first embodiment, and therefore descriptions thereof are omitted here. When the judgment is negative, the padding unit 404B performs padding to the extension area with use of the output pixel (here, the output pixel is either a first or second vertical pixel). The methods for padding using a first or second vertical pixel are the same as in the first embodiment, and are therefore descriptions thereof are omitted here.

According to the described operations, the padding unit 404B outputs (copies) the image decoded by the decoding unit 100B to extension area when outputting the decoded image to the frame memory 402B.

### (2) Input/output unit 200B

Input/output unit 200B is the same as the input/output unit 200 of the first embodiment, and therefore a description thereof is omitted here.

### (3) Decoding unit 100B

The decoding unit 100B includes a variable length decoding unit 101B, and inverse quantization unit 102B, an inverse DCT unit 103B, a motion decoding unit 104B, a motion vector conversion unit 106B, and a data input/output unit 108B.

The decoding unit 100B reproduces an image by decoding the image in 16 pixel by 16 pixel macroblocks.

The variable length decoding unit 101B, the inverse quantization unit 102B, the inverse DCT unit 103B, the motion compensation decoding unit 104B, and the motion vector conversion unit 106B are the same as the variable length decoding unit 101, the inverse quantization unit 102, the inverse DCT unit 103, the motion compensation decoding unit 104, and the motion vector conversion unit 106 of the first embodiment, and therefore descriptions thereof are omitted.

The following describes the data output unit 108B.

The data output unit 108B receives decoded data from motion compensation decoding unit 104B, and outputs the received decoded data one pixel at a time to the padding unit 404 via the memory control unit 300B.

The data output unit 108B obtains an output pixel from the decoded data, and outputs the obtained pixel and the address to which the output pixel is to be output to the padding unit 404B via the memory control unit 300B. The data output unit 108B is able to outputs the decoded data to the padding unit 404B by performing the described operations the same number of times as pixels in the decoded data.

### (4) Memory control unit 300B

The memory control unit 300B receives encoded data from the input/output unit 200B, and outputs the received encoded data to the memory unit 401B.

Furthermore, the memory control unit 300A outputs an encoded series received from the memory unit 401B to the variable length decoding unit 101B of the decoding unit 100B.

On receiving an output pixel and an output address from the data output unit 108B, the memory control unit 300B outputs the received output pixel and output address to the padding unit 404B.

In addition, the memory control unit 300B, on receiving a motion vector reference address from the motion vector conversion unit 106B, obtains reference data from a reference frame with use of the received reference address, and outputs the obtained reference data to the motion compensation decoding unit 104B.

The memory control unit 300B reads a decoded image from the frame memory 402B, and outputs the read image to the input/output unit 200B.

Note that the memory control unit 300B performs input and output of data with the memory unit 401B and input and output of data with the frame memory 402B by issuing DMA.

### 3.2 Decoding method

The following describes decoding processing for decoding encoded data.

Note that decoding processing is the same is in the first embodiment, and therefore a description thereof is omitted here.

Furthermore, motion compensation decoding processing in the decoding processing is also the same an in the first embodiment, and therefore a description thereof is omitted here.

The following describes decoded data output processing in the decoding processing and write processing performed by the padding unit 404B.

### 3.2.1 Decoded data output processing

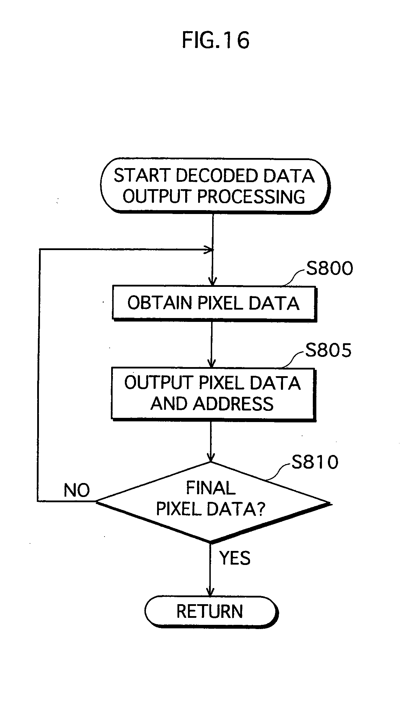

The following describes decoded data output processing performed by the data output unit 108B, with use of the flowchart in FIG. 16.

The data output unit 108B obtains pixel data from decoded data (step S800), and outputs the obtained pixel data and the output address of the pixel data to the padding unit 404B via the memory control unit 300B (step S805).

The data output unit 108B judges whether or not the obtained pixel data is the final pixel data (step S810), and when the pixel data is judged to be the final pixel data ("YES" at step S810), ends the processing. When the pixel data is judged not to be the final pixel ("NO" at step S810), the data output unit 108B returns to step S800, obtains the next pixel data, and continues the processing.

### 3.2.2 Write processing

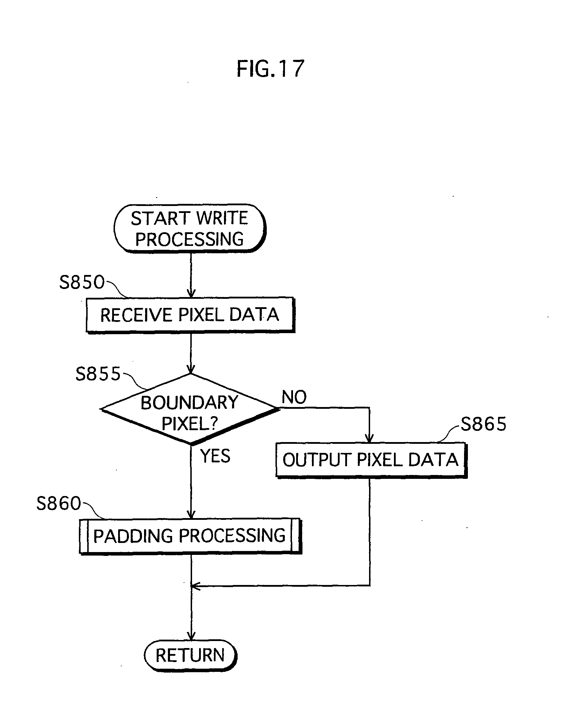

The following describes write processing performed by the padding unit 404B, with use of the flowchart in FIG. 17.

The padding unit 404B receives pixel data of a decoded image and the output address of the pixel data, from the decoding unit 100B via the memory control unit 300B (step S850).

The padding unit 404B judges whether or not the received pixel data is a boundary pixel (step S855).

When the pixel is judged to be a boundary pixel ("YES" at step S855), the padding unit 404B performs padding processing (step S860).

When the pixel is judged not to be a boundary pixel ("NO" at step S855), the padding unit 404B writes the pixel data to the frame memory 402B based on the received address (step S865).

Note that padding processing performed in the write processing is the same as that described in the first embodiment, an therefore a description thereof is omitted here. Furthermore, vertical padding processing, horizontal padding processing, and horizontal and vertical padding processing performed in the write processing are also the same as in the first embodiment, and therefore a description thereof is omitted here.

### 3.3 Summary of the second embodiment

As has been described, according to the second embodiment, when outputting one macroblock of decoded data to the frame memory, padding processing to the extension area is performed when boundary pixels exist in the decoded data. For this reason, it is unnecessary to read boundary pixels from the frame memory, and therefore the number of access to the frame memory is reduced in comparison with when padding processing to the extension area is performed after decoding the image.

In addition, since the reference frame is padded to the extension area in advance, when decoding an image, if the motion vector references outside the reference area that includes the extension area, the video can be decoded referring to outside the area, with only clipping processing of the movement vector. This lightens processing for motion compensation decoding.

Furthermore, since padding processing to the extension area is performed by the padding unit 404B of the external memory 400B, it is unnecessary for the decoding unit 100B to output pixel data to the external memory 400B every time pixel data is output to the extension area. Therefore, traffic between the external memory 400B and the decoding unit 100B is lightened.

### 3.3.1 Modifications of the third embodiment

Although the present invention has been described based on a third embodiment, the present invention is not limited to the third embodiment. The following cases are included in the present invention.
(1) The decoded data is not limited to being output to the frame memory one pixel at a time in the third embodiment. Instead, the decoded data may be output to the frame memory according to burst transfer.
   Note that since burst transferring can be implemented as described in modification (2) in the first embodiment, a description is omitted here.
(2) The padding unit 404B is not limited to being provided in the external memory 400B, and may be provided in the memory control unit 300B.
(3) The third embodiment and any of the modifications thereof may be combined.

### 4. Other modifications

Although the present invention has been described based on the first, second, and third embodiments, the present invention is not limited to these embodiments. The following cases are included in the present invention.
(1) The information received by the mobile telephone is not limited to being a TS. The information may be a bitstream consisting of digital information of video that has been made into a digital signal. Instead of a TS, the bit stream may be a program stream. Here, the input/output unit of the image processing unit receives the bitstream, obtains data relating to the image from the received bitstream, generates encoded data from the obtained data, and outputs the generated encoded data to the memory unit. The operations performed by the decoding unit are as described in the first embodiment, and therefore a description thereof is omitted here.
(2) The size of the image is not limited to being 176 pixels by 144 pixels. The size of the image may be another size such as 352 pixels (horizontal) by 288 pixels (vertical).
(3) The size of the macroblocks is not limited to being 16 pixels by 16 pixels, and may be another block size such as eight pixels by eight pixels. This enable the motion vectors to be set in units of eight pixels by eight pixels.
(4) The horizontal and vertical widths of the extension area are not limited to being multiples of 16-pixel macroblocks, and may be any width of one or more pixels.
   Furthermore, the widths may match the block size used to decode. For example, if the block size used in decoding is eight pixels by eight pixels, the horizontal and vertical widths of the extension area may each be eight pixels.
(5) The image decoding apparatus is not limited to being a mobile telephone, and may be any apparatus that decodes and reproduces encoded video. Examples of the image decoding apparatus are a set top box, a DVD apparatus, a mobile communication apparatus, a broadcast reception apparatus, and an apparatus that reproduces video distributed over a broadband network.
(6) The external memory is not limited to being a DRAM, and may another type of memory such as a SDRAM (synchronous DRAM).
   The external memory is not limited to being a volatile memory, and may be a non-volatile memory.
   Furthermore, the external memory is not limited to being external, but may be an internal memory provided in the decoding unit.
(7) The present invention may be methods shown by the above. Furthermore, the methods may be a computer program realized by a computer, and may be a digital signal of the computer program.
   Furthermore, the present invention may be a computer-readable recording medium such as a flexible disc, a hard disc, a CD-ROM, an MO, a DVD, a DVD-ROM, a DVD-RAM, a BD (Blu-Ray Disc), or a semiconductor memory, that stores the computer program or the digital signal. Furthermore, the present invention may be the computer program or the digital signal recorded on any of the aforementioned recording media.
   Furthermore, the present invention may be the computer program or the digital signal transmitted on a electric communication line, a wireless or wired communication line, or a network of which the Internet is representative.
   Furthermore, the present invention may be a computer system that includes a microprocessor and a memory, the memory storing the computer program, and the microprocessor operating according to the computer program.
   Furthermore, by transferring the program or the digital signal to the recording medium apparatus, or by transferring the program or the digital signal via a network or the like, the program or the digital signal may be executed by another independent computer system.
(8) The present invention may be any combination of the embodiments and modifications.

### 5. Industrial Applicability

The decoding apparatus and decoding method of the present invention may be used in techniques for decoding a screen with reference to an extension area of a reference screen.

Although the present invention has been fully described by way of examples with reference to the accompanying drawings, it is to be noted that various changes and modifications will be apparent to those skilled in the art. Therefore, unless otherwise such changes and modifications depart from the scope of the present invention, they should be construed as being included therein.

## Claims

1. A decoding apparatus that decodes video, comprising:
a storage unit that includes an image area and an extension area, the image area being for storing one frame image of video, and the extension area being for storing an extension image that surrounds the frame image;
a decoding unit operable to receive a compression encoded series that has been generated by compression encoding a frame image in blocks of a predetermined number of pixels, and decode the received compression encoded series so as to generate a block image composed of the predetermined number of pixels; and
an output unit operable to output the block image to the image area of the storage unit,
wherein, when outputting the block image, the output unit outputs pixels in the block image that are adjacent to an inner edge of the frame to respective corresponding locations in the extension area.

2. The decoding apparatus of Claim 1, wherein
when outputting the block image, the output unit judges, for each pixel in the block image, whether or not the pixel is adjacent to the inner edge, and when the pixel is judged to be adj acent to the inner edge, outputs the pixel to a corresponding location in the extension area.

3. The decoding apparatus of Claim 2, further comprising:
repetition unit operable to control the decoding unit and the output unit so as to repeatedly perform block image generation, block image output, and output of pixels in the block data that are adjacent to the inner edge to a corresponding location in the extension area, until generation of the frame image and the extension image is complete.

4. The decoding apparatus of Claim 2, wherein
when a pixel included in the block image is judged to be adjacent to the inner edge, the output unit calculates one of (i) a horizontal direction address, (ii) a vertical direction address and (iii) horizontal and vertical direction address, in the extension area, each address indicating a location to which the pixel is to be output in the extension area, and outputs the pixel to the extension area based on the calculated address.

5. The decoding apparatus of Claim 4, wherein
the storage unit further stores, in advance, a reference frame image that is made up of another frame image and another extension image,
the compression encoded series includes encoded information that is composed of a motion vector and a difference block image, the motion vector indicating either inside or outside of the reference frame image, and the difference block image being a difference between an encoded block and a reference block image in the reference frame image, and
the decoding unit includes:
a reception sub-unit operable to receive the compression encoded series;
an obtaining sub-unit operable to decode the compression encoded series, thereby obtaining the motion vector and the difference block image;
a motion vector judgment sub-unit operable to judge whether or not the motion vector indicates outside the reference frame image;
a motion vector conversion sub-unit operable to, when the motion vector is judged to indicate outside the reference frame image, convert the motion vector so as to indicate a location that is closest in the reference frame image to the location indicated by the motion vector before conversion, and obtain reference data indicated by the converted motion vector after conversion from the reference frame image; and
a block image generation sub-unit operable to generate the block image with use of the reference data and the difference block image.

6. The decoding apparatus of Claim 5, wherein
when the motion vector judgment sub-unit judges that the motion vector does not indicate outside the reference frame image, the motion vector conversion sub-unit obtains reference data from the reference frame with use of the motion vector.

7. The decoding apparatus of Claim 4, wherein
the compression encoded series includes information of an encoded block image that is composed of an encoded block, and
the decoding unit includes:
a reception sub-unit operable to receive the compression encoded series; and
a generation sub-unit operable to decode the compression encoded series, thereby generating the encoded block image, and treat the generated encoded block image as a block image.

8. The decoding apparatus of Claim 2, wherein
the storage unit is one of an external memory and an internal memory.

9. The decoding apparatus of Claim 2, wherein
the storage unit and the output unit are one of an external memory and an internal memory.

10. The decoding apparatus of Claim 2, wherein
the output unit includes:
a first output sub-unit operable to output the block image to the image area of the storage unit;
a judgment sub-unit operable to, when the block image is being output, judge, for each pixel thereof, whether or not the pixel is adjacent to the inner edge of the frame; and
a second output sub-unit operable to, when the judgment sub-unit judges that the pixel is adjacent to the inner edge of the frame, output the pixel to a corresponding location in the extension area.

11. Amobileterminalapparatusforreproducingvideo, comprising the decoding apparatus of Claim 1.

12. A decoding method used in a decoding apparatus for decoding video,
the decoding apparatus comprising:
a storage unit that includes an image area and an extension area, the image area being for storing one frame image of video, and the extension area being for storing an extension image that surrounds the frame image, and
the decoding method comprising:
a decoding step of receiving a compression encoded series that has been generated by compression encoding a frame image in blocks of a predetermined number of pixels, and decoding the received compression encoded series so as to generate a block image composed of the predetermined number of pixels; and
an output step of outputting the block image to the image area of the storage unit,
wherein, when block image is being output in the output step, pixels in the block image that are adjacent to an inner edge of the frame are output to respective corresponding locations in the extension area.

13. A decoding program used in a decoding apparatus for decoding video,
the decoding apparatus comprising:
a storage unit that includes an image area and an extension area, the image area being for storing one frame image of video, and the extension area being for storing an extension image that surrounds the frame image, and
the decoding method comprising:
a decoding step of receiving a compression encoded series that has been generated by compression encoding a frame image in blocks of a predetermined number of pixels, and decoding the received compression encoded series so as to generate a block image composed of the predetermined number of pixels; and
an output step of outputting the block image to the image area of the storage unit,
wherein, when block image is being output in the output step, pixels in the block image that are adjacent to an inner edge of the frame are output to respective corresponding locations in the extension area.

14. A computer-readable recording medium having recorded thereon a decoding program used in a decoding apparatus for decoding video,
the decoding apparatus comprising:
a storage unit that includes an image area and an extension area, the image area being for storing one frame image of video, and the extension area being for storing an extension image that surrounds the frame image, and
the decoding method comprising:
a decoding step of receiving a compression encoded series that has been generated by compression encoding a frame image in blocks of a predetermined number of pixels, and decoding the received compression encoded series so as to generate a block image composed of the predetermined number of pixels; and
an output step of outputting the block image to the image area of the storage unit,
wherein, when block image is being output in the output step, pixels in the block image that are adjacent to an inner edge of the frame are output to respective corresponding locations in the extension area.
